(19) Europäisches Patentamt
European Patent Office
Office européen des brevets

(11) EP 2 966 150 B1

(12) # EUROPEAN PATENT SPECIFICATION

(45) Date of publication and mention of the grant of the patent:
**05.08.2020 Bulletin 2020/32**

(21) Application number: **14760588.5**

(22) Date of filing: **27.02.2014**

(51) Int Cl.:
***C09K 19/30*** (2006.01) ***C09K 19/12*** (2006.01)
***C09K 19/20*** (2006.01) ***C09K 19/34*** (2006.01)
***C09K 19/38*** (2006.01) ***C09K 19/42*** (2006.01)
***C09K 19/54*** (2006.01) ***G02F 1/13*** (2006.01)
***C09K 19/02*** (2006.01) ***C09K 19/44*** (2006.01)

(86) International application number:
**PCT/JP2014/054921**

(87) International publication number:
**WO 2014/136654 (12.09.2014 Gazette 2014/37)**

(54) **NEMATIC LIQUID CRYSTAL COMPOSITION AND LIQUID CRYSTAL DISPLAY ELEMENT USING SAME**

NEMATISCHE FLÜSSIGKRISTALLZUSAMMENSETZUNG UND FLÜSSIGKRISTALLANZEIGEELEMENT DAMIT

COMPOSITION À CRISTAUX LIQUIDES NÉMATIQUES ET ÉLÉMENT D’AFFICHEUR À CRISTAUX LIQUIDES L’UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.03.2013 JP 2013043990**

(43) Date of publication of application:
**13.01.2016 Bulletin 2016/02**

(73) Proprietor: **DIC Corporation**
**Tokyo 174-8520 (JP)**

(72) Inventors:
- **SUDO Go**
**Kitaadachi-gun**
**Saitama 362-8577 (JP)**
- **KAWAKAMI Shotaro**
**Kitaadachi-gun**
**Saitama 362-8577 (JP)**

(74) Representative: **Beckmann, Claus**
**Kraus & Weisert**
**Patentanwälte PartGmbB**
**Thomas-Wimmer-Ring 15**
**80539 München (DE)**

(56) References cited:
**EP-A1- 2 050 807**
**EP-A1- 2 325 280**
**EP-A1- 2 727 978**
**EP-A1- 2 835 684**
**EP-A1- 2 883 935**
**EP-A1- 2 907 864**
**WO-A1-2008/018248**
**WO-A1-2010/084810**
**WO-A1-2012/066933**
**WO-A1-2013/054682**
**WO-A1-2013/122011**
**WO-A1-2013/187373**
**WO-A1-2014/024648**
**JP-A- 2008 031 432**
**JP-A- 2011 144 274**
**JP-B1- 5 170 603**
**US-A1- 2011 140 040**
**US-A1- 2011 175 027**
**US-A1- 2012 261 614**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 966 150 B1

## Description

Technical Field

The present invention relates to a nematic liquid crystal composition with negative dielectric anisotropy ($\Delta\varepsilon$) useful as a liquid crystal display material, and to a liquid crystal display device using the composition.

Background Art

Liquid crystal display devices are being used in watches, calculators, various home electrical appliances, measurement instruments, automobile panels, word processors, electronic organizers, printers, computers, televisions, etc. Representative examples of the liquid crystal display modes include a TN (twisted nematic) mode, a STN (super twisted nematic) mode, a DS (dynamic scattering) mode, a GH (guest-host) mode, an IPS (in-plane switching) mode, an OCB (optical compensation birefringence) mode, an ECB (electrically controlled birefringence) mode, a VA (vertical alignment) mode, a CSH (color super homeotropic) mode, and FLC (ferroelectric liquid crystal). Examples of the driving mode include static driving, multiplex driving, single matrix mode, and active matrix (AM) mode with which TFTs (thin film transistors), TFDs (thin film diodes), etc., are used for driving.

Among the display modes, the IPS mode, the ECB mode, the VA mode, the CSH mode, and the like are characterized in that they use liquid crystal materials with negative $\Delta\varepsilon$. In particular, the VA display mode that involves AM driving is employed in display devices that require high speed and wide viewing angles, such as televisions, for example.

Nematic liquid crystal compositions used in such display modes as the VA mode are required to achieve low-voltage driving, high-speed response, and a wide operation temperature range. In other words, negative $\Delta\varepsilon$ with a large absolute value, low viscosity, and a high nematic phase-isotropic liquid phase transition temperature ($T_{ni}$) are required. Furthermore, refractive index anisotropy ($\Delta n$) of the liquid crystal material must be adjusted within an appropriate range with respect to the cell gap (d) due to the setting of the product $\Delta n \times d$. Since high-speed response is important in order for the liquid crystal display devices to be used in televisions and the like, liquid crystal materials desirably have low viscosity ($\eta$).

Heretofore, properties of liquid crystal compositions have been improved by studying various compounds with negative $\Delta\varepsilon$ having a large absolute value.

There has been disclosed (refer to PTL 1) a liquid crystal composition with negative $\Delta\varepsilon$ using the following liquid crystal compounds (A) and (B) having a 2,3-difluorophenylene skeleton:

[Chem. 1]

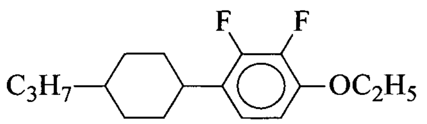
(A)

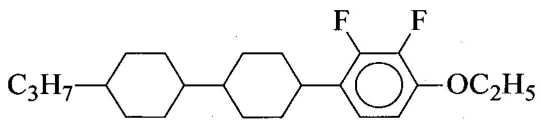
(B)

This liquid crystal composition uses liquid crystal compounds (C) and (D) as the compounds having approximately zero $\Delta\varepsilon$ but fails to achieve viscosity sufficiently low for liquid crystal compositions that offer high-speed response such as one required by liquid crystal televisions and the like:

[Chem. 2]

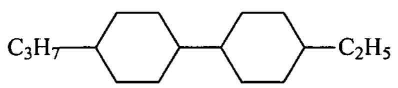
(C)

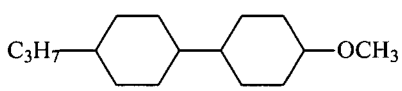
(D)

Liquid crystal compositions that use a compound represented by formula (E) have been disclosed; one such

liquid crystal composition (refer to PTL 2) contains the liquid crystal compound (D) described above and has small Δn and another such liquid crystal composition (refer to PTL 3) contains a compound (alkenyl compound) intramolecularly having an alkenyl group such as a liquid crystal compound (F) for improving response speed. Thus, further studies have been needed to simultaneously achieve high Δn and high reliability.

[Chem. 3]

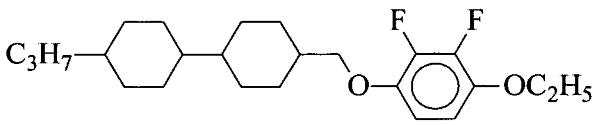
(E)

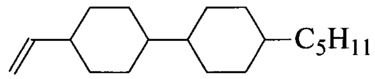
(F)

A liquid crystal composition that uses a compound represented by formula (G) has already been disclosed (refer to PTL 4). This liquid crystal composition also contains an alkenyl-compound-containing compound as the liquid crystal compound (F) described above, and thus an issue of likelihood of display failures such as ghosting and display nonuniformity remains.

[Chem. 4]

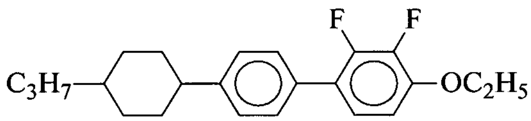
(G)

Influence of the liquid crystal composition containing an alkenyl compound on display failures has already been disclosed (refer to PTL 5). Generally, the decrease in the alkenyl compound content increases η of the liquid crystal composition and makes it difficult to achieve high-speed response. Thus, it has been difficult to achieve suppression of display failures and high-speed response simultaneously.

As discussed above, merely combining a compound that has negative Δε and liquid crystal compounds (C), (D), and (F) has not readily led to development of a liquid crystal composition having negative Δε, with which high Δn and low η are achieved simultaneously and display failures are prevented or suppressed.

Although PTL 6 discloses that response speed of a homeotropic liquid crystal cell can be improved by using a liquid crystal material having a large index represented by (formula 1), the improvement has not been sufficient.

[Math. 1]

$$FoM = K_{33} \cdot \Delta n^2 / \gamma 1 \quad \text{(formula 1)}$$

$K_{33}$: elastic modulus

$\Delta n$: refractive index anisotropy

$\gamma 1$: rotational viscosity

$K_{33}$: elastic modulus
Δn: refractive index anisotropy
γ1: rotational

In sum, a liquid crystal composition required to have high-speed response for use in liquid crystal televisions and the like has also been required to achieve sufficiently low viscosity (η), sufficiently low rotational viscosity (γ1), and high elastic modulus ($K_{33}$) without decreasing the refractive index anisotropy (Δn) and nematic phase-isotropic liquid phase transition temperature ($T_{ni}$).

US 2011/140040 A1 relates to a liquid crystal composition that satisfies at least one of characteristics such as a high maximum temperature of a nematic phase, a low minimum temperature of a nematic phase, a small viscosity, a suitable optical anisotropy, a large negative dielectric anisotropy, a large specific resistance, a high stability to ultraviolet

light and a high stability to heat, or that is suitably balanced regarding at least two of the characteristics; and is to provide a AM device that has a short response time, a large voltage holding ratio, a large contrast ratio, and a long service life, wherein the liquid crystal composition has negative dielectric anisotropy and includes a two-ring compound having a large negative dielectric anisotropy and having at least three fluorine atoms at the lateral positions as a first component, a specific two-ring or three-ring compound having a pyran ring as a second component, a specific compound having a small viscosity as a third component and a specific compound having a large negative dielectric anisotropy as a fourth component, and the liquid crystal display device contains this composition.

US 2012/261614 A1 relates to a liquid crystal composition satisfying at least one of characteristics such as high maximum temperature of nematic phase, low minimum temperature of the nematic phase, small viscosity, suitable optical anisotropy, large negative dielectric anisotropy, large specific resistance, high stability to ultraviolet light and heat, or having a suitable balance regarding at least two of the characteristics; and an AM device having short response time, large voltage holding ratio, large contrast ratio, and long service life.

EP 2 325 280 A1 relates to a liquid crystal composition is provided that satisfies at least one characteristic among the characteristics such as a high maximum temperature of a nematic phase, a low minimum temperature of a nematic phase, a small viscosity, a suitable optical anisotropy, negatively large dielectric anisotropy, a large specific resistance, a high stability to ultraviolet light and a high stability to heat, or is properly balanced regarding at least two characteristics.

US 2011/175027 A1 relates to a liquid crystal composition that satisfies at least one of characteristics such as a high maximum temperature of a nematic phase, a low minimum temperature of a nematic phase, a small viscosity, a suitable optical anisotropy, a negatively large dielectric anisotropy, a large specific resistance and a high stability to ultraviolet light or heat, or that is suitably balanced regarding at least two of the characteristics.

EP 2 050 807 A1 relates to a liquid crystal composition that satisfies many characteristics among the characteristics such as a high maximum temperature of a nematic phase, a low minimum temperature of a nematic phase, a small viscosity, a large optical anisotropy, a large negative dielectric anisotropy, a large specific resistance, a high stability to ultraviolet light and a high stability to heat, or that is properly balanced regarding many characteristics.

EP 2 883 935 A1, which belongs to the state of the art under Article 54(3) EPC, relates to nematic liquid crystal composition having a negative dielectric anisotropy which can be suitably used as a material for liquid crystal displays and to a liquid crystal display element including the nematic liquid crystal composition.

EP 2 727 978 A1, which belongs to the state of the art under Article 54(3) EPC, relates to a nematic liquid crystal composition that exhibits a negative dielectric anisotropy, the liquid crystal composition being useful as a liquid crystal display material, and a liquid crystal display element using the same; the liquid crystal composition has a large absolute value of the dielectric anisotropy thereof and a low viscosity. The compositions according to Examples 5 and 8 of this application are disclaimed in claim 1.

WO 2012/066933 A1 relates to a liquid crystal composition, which satisfies at least one of such characteristics as high upper limit temperature of the nematic phase, low lower limit temperature of the nematic phase, low viscosity, adequate optical anisotropy, large negative dielectric anisotropy, high resistivity, high stability with respect to ultraviolet light and high stability with respect to heat, or which has an adequate balance among at least two of the above-mentioned characteristics; and an AM element which has a short response time, high voltage holding ratio, high contrast ratio, and long life.

JP 2008 031432 A relates to a liquid crystal composition satisfying at least one property of a high upper limit of nematic phase, a low lower limit of nematic phase, a low viscosity, a proper optical anisotropy, a high negative dielectric anisotropy, a high specific resistance, high stability to ultraviolet light, high stability to heat, and a liquid crystal display element comprising the composition; the liquid crystal composition comprises a specific tetracyclic compound containing a phenylene in which a hydrogen atom is replaced with a fluorine atom as a first component, a specific compound containing a phenylene in which two hydrogen atoms are replaced with fluorine or chlorine atoms as a second component and a specific compound containing two cyclohexylene ring as a third component and has a negative dielectric anisotropy; the liquid crystal display element comprises the composition.

WO 2010/084810 A1 relates to a liquid crystal composition which satisfies at least one of such characteristics as high upper limit temperature of the nematic phase, low lower limit temperature of the nematic phase, low viscosity, adequate optical anisotropy, large negative dielectric anisotropy, high resistivity, high stability with respect to ultraviolet light and high stability with respect to heat, or which has an adequate balance between at least two of the above-mentioned characteristics; and an AM element having a short response time, high voltage holding ratio, high contrast ratio, and long life; the liquid crystal composition contains a specific compound having a large negative dielectric anisotropy as a first component, and a specific compound containing a pyran ring and having a large negative dielectric anisotropy as a second component; the liquid crystal composition may also contain a specific compound having a low viscosity as a third component, and a specific compound having a large negative dielectric anisotropy as a fourth component; the liquid crystal composition has a negative dielectric anisotropy; the liquid crystal display element contains the composition.

WO 2014/024648 A1, which belongs to the state of the art under Article 54(3) EPC, relates to a liquid crystal

composition that satisfies at least one property or has a suitable balance of two or more properties among a high upper limit temperature of the nematic phase, low lower limit temperature of the nematic phase, low viscosity, suitable optical anisotropy, large negative dielectric anisotropy, large specific resistance, high UV stability, and high heat stability; and a PSA device having a short response time, large pretilt angle, low concentration of residual polymerizable compounds, high voltage retention rate, large contrast ratio, and long life; the liquid crystal composition contains, in a suitable ratio, a compound having three or more polymerizable groups as a first component and a compound having one or two polymerizable groups as a second component, and optionally contains a specific compound having a large negative dielectric anisotropy and low lower limit temperature as a third component or a specific compound having a low viscosity or high upper limit temperature as a fourth component; and a liquid crystal display element containing this composition.

Citation List

Patent Literature

PTL 1: Japanese Unexamined Patent Application Publication No. 8-104869
PTL 2: EP Patent Application Publication No. 0474062
PTL 3: Japanese Unexamined Patent Application Publication No. 2006-37054
PTL 4: Japanese Unexamined Patent Application Publication No. 2001-354967
PTL 5: Japanese Unexamined Patent Application Publication No. 2008-144135
PTL 6: Japanese Unexamined Patent Application Publication No. 2006-301643

Summary of Invention

Technical Problem

An object of the present invention is to provide a liquid crystal composition that has sufficiently low viscosity ($\eta$), sufficiently low rotational viscosity ($\gamma 1$), high elastic modulus ($K_{33}$), and negative dielectric anisotropy ($\Delta\varepsilon$) with a large absolute value without decreasing the refractive index anisotropy ($\Delta n$) and nematic phase-isotropic liquid phase transition temperature ($T_{ni}$), and to also provide a high-display-quality, high-response-speed liquid crystal display device of a VA mode or the like that uses the liquid crystal composition and undergoes no or less display failures.

Solution to Problem

The inventors of the present invention have studied various compounds and found that the issues described above can be resolved by combining particular compounds. Thus, the present invention has been made.

The present invention provides the liquid crystal composition defined in claim 1, which contains, inter alia, a compound represented by formula (I-1) as a first component:

[Chem. 5]

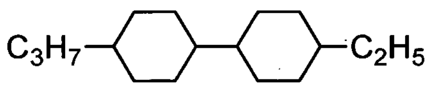

(I-1)

a compound represented by formula (I-2) as a second component:

[Chem. 6]

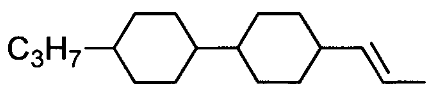

(I-2)

and a compound having negative dielectric anisotropy ($\Delta\varepsilon$) whose absolute value is greater than 3 as a third component. A liquid crystal display device using the liquid crystal composition is also provided.

Advantageous Effects of Invention

Since the liquid crystal composition of the present invention has sufficiently low viscosity (η), sufficiently low rotational viscosity (γ1), high elastic modulus ($K_{33}$), and negative dielectric anisotropy (Δε) with a large absolute value without decreasing the refractive index anisotropy (Δn) and nematic phase-isotropic liquid phase transition temperature ($T_{ni}$), a liquid crystal display device such as a VA mode device that uses the liquid crystal composition undergoes no or less display failures and exhibits high display quality and high response speed.

Description of Embodiments

The first component content is 10% to 25% by mass in order to obtain low viscosity or low rotational viscosity.
As the second component, preferably 3% to 20% by mass, more preferably 5% to 15% by mass, and most preferably 5% to 10% by mass of the compound represented by general formula (I-2) is contained. Specifically, the second component content is preferably 10% to 20% by mass in order to obtain low viscosity or low rotational viscosity, and is preferably 3% to 10% by mass if suppression of precipitation at low temperature is important.
A compound having negative dielectric anisotropy (Δε) with an absolute value greater than 3 is contained as the third component. Specifically, one or more compounds selected from the group consisting of compounds represented by general formula (II-1) and general formula (II-2) are contained as the third component.

[Chem. 7]

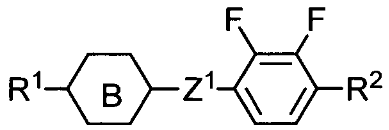

(II-1)

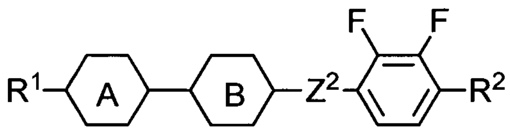

(II-2)

In the formulae, $R^2$ represents an alkyl group having 1 to 10 carbon atoms, an alkoxyl group having 1 to 10 carbon atoms, an alkenyl group having 2 to 10 carbon atoms, or an alkenyloxy group having 2 to 10 carbon atoms; one $-CH_2-$ or two or more nonadjacent $-CH_2-$ in $R^1$ and $R^2$ may each independently be substituted with -O- and/or -S-; one or more hydrogen atoms in $R^1$ and $R^2$ may each independently be substituted with a fluorine atom or a chlorine atom; $R^1$ represents an alkyl group having 1 to 3 carbon atoms or an alkenyl group having 3 carbon atoms (propenyl group); $R^2$ preferably represents an alkyl group having 1 to 5 carbon atoms, an alkoxyl group having 1 to 5 carbon atoms, or an alkenyloxy group and more preferably represents an alkyl group having 1 or 2 carbon atoms or an alkoxy group having 1 or 2 carbon atoms. In the formulae, ring A and ring B each independently represent a trans-1,4-cyclohexylene group, a 1,4-phenylene group, a 2-fluoro-1,4-phenylene group, a 3-fluoro-1,4-phenylene group, a 3,5-difluoro-1,4-phenylene group, a 2,3-difluoro-1,4-phenylene group, a 1,4-cyclohexenylene group, a 1,4-bicyclo[2.2.2]octylene group, a piperidine-1,4-diyl group, a naphthalene-2,6-diyl group, a decahydronaphthalene-2,6-diyl group, or a 1,2,3,4-tetrahydronaphthalene-2,6-diyl group and more preferably each independently represent a trans-1,4-cyclohexylene group or a 1,4-phenylene group. In the formulae, $Z^1$ and $Z^2$ each independently represent $-OCH_2-$, $-CH_2O-$, $-CF_2O-$, $-OCF_2-$, $-CH_2CH_2-$, $-CF_2CF_2-$, or a single bond, preferably each independently represent $-CH_2O-$, $-CF_2O-$, $-CH_2CH_2-$, $-CF_2CF_2-$, or a single bond, more preferably each independently represent $-CH_2O-$, $-CH_2CH_2-$, or a single bond, and most preferably each independently represent $-CH_2O-$ or a single bond.
The number of compounds represented by general formula (II-1) and general formula (II-2) contained is 1 or more and is preferably 2 to 10. The content thereof is 30% to 70% by mass.
The liquid crystal composition of the present invention preferably simultaneously contains a compound represented by general formula (II-1) and a compound represented by general formula (II-2).
The compound represented by general formula (II-1) is specifically preferably a compound selected from the compounds represented by general formula (II-A1) to general formula (II-A4):

[Chem. 8]

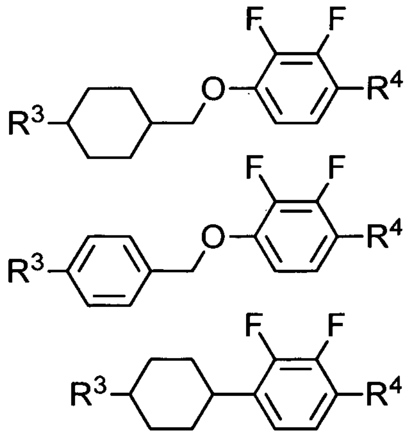

(II-A1)

(II-A2)

(II-A3)

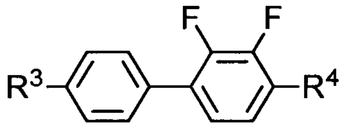

(II-A4)

(In the formulae, $R^3$ and $R^4$ are each independently the same as $R^1$ and $R^2$). A compound represented by general formula (II-A1), a compound represented by general formula (II-A3), and a compound represented by general formula (II-A4) are preferable. A compound represented by general formula (II-A1) and a compound represented by general formula (II-A4) are more preferable.

The compound represented by general formula (II-2) is a compound selected from compounds represented by general formula (II-B1) to general formula (II-B6)

[Chem. 9]

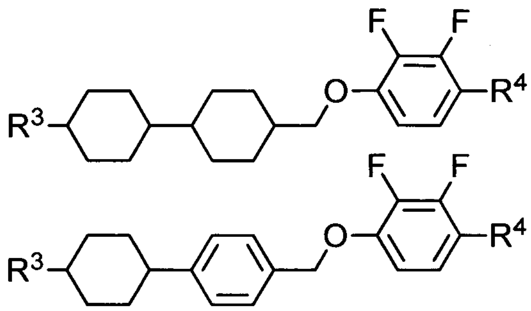

(II-B1)

(II-B2)

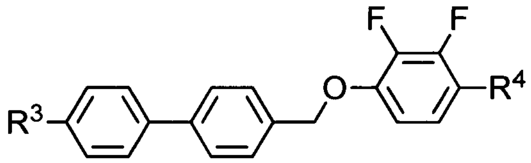

(II-B3)

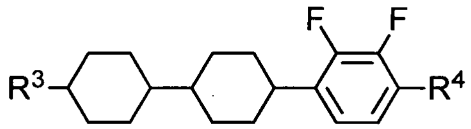

(II-B4)

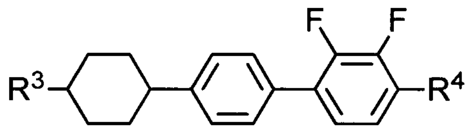

(II-B5)

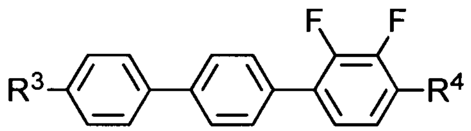

(II-B6)

(In the formulae, $R^3$ and $R^4$ are each independently the same as $R^1$ and $R^2$). A compound represented by general formula (II-B1), general formula (II-B3), general formula (II-B4), general formula (II-B5), or general formula (II-B6) is more preferable. A compound represented by general formula (II-B1) is most preferable.

Specifically, the third component is preferably a combination of general formula (II-A1) and general formula (II-B1), more preferably a combination of general formula (II-A1), general formula (II-B1), and general formula (II-A3), and yet more preferably a combination of general formula (II-A1), general formula (II-B1), and general formula (II-A4).

More specifically, the third component is preferably a combination of general formula (II-A3) and general formula (II-B4), more preferably a combination of general formula (II-A3), general formula (II-B4), and general formula (II-B5), and yet more preferably a combination of general formula (II-A3), general formula (II-B4), and general formula (II-B1).

More specifically, the third component is preferably a combination of general formula (II-A4) and general formula (II-B4), more preferably a combination of general formula (II-A4) and general formula (II-B1), yet more preferably a combination of general formula (II-A4), general formula (II-B1), and general formula (II-B5), and most preferably a combination of general formula (II-A4), general formula (II-B1), and general formula (II-B3).

The liquid crystal composition of the present invention preferably contains, as a fourth component, one or more compounds selected from general formula (III-A) to general formula (III-J):

[Chem. 10]

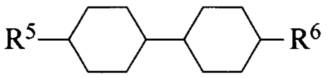
(III-A)

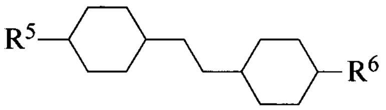
(III-B)

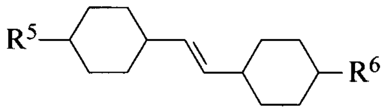
(III-C)

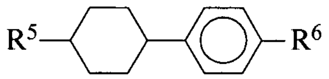
(III-D)

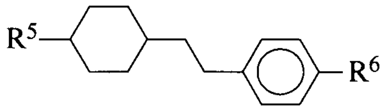
(III-E)

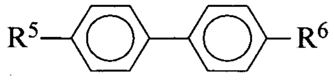
(III-F)

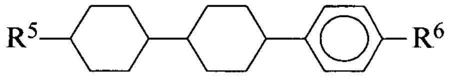
(III-G)

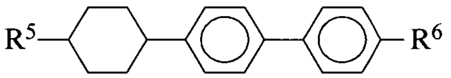
(III-H)

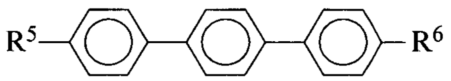
(III-I)

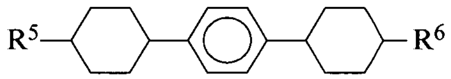
(III-J)

(In the formulae, $R^5$ represents an alkyl group having 1 to 5 carbon atoms or an alkenyl group having 2 to 5 carbon atoms, $R^6$ represents an alkyl group having 1 to 5 carbon atoms, an alkoxyl group having 1 to 5 carbon atoms, an alkenyl group having 2 to 5 carbon atoms, or an alkenyloxy group having 2 to 5 carbon atoms). However, compounds represented by general formula (III-A) do not include the same compounds as those represented by formula (I-1) and formula (I-2).

The fourth component is preferably a compound selected from general formula (III-A), general formula (III-D), general formula (III-F), general formula (III-G), and general formula (III-H), more preferably a compound selected from general formula (III-A), general formula (III-F), general formula (III-G), and general formula (III-H), yet more preferably a compound selected from general formula (III-A), general formula (III-G), and general formula (III-H), yet more preferably a compound selected from general formula (III-A), general formula (III-F), and general formula (III-H), and most preferably a compound selected from general formula (III-A) and general formula (III-F).

In the compounds represented by general formula (III-D), general formula (III-G), and general formula (III-H), $R^5$ preferably represents an alkyl group having 1 to 5 carbon atoms or an alkenyl group having 2 to 5 carbon atoms, and $R^6$ preferably represents an alkyl group having 1 to 5 carbon atoms or an alkoxy group having 1 to 5 carbon atoms. $R^5$ more preferably represents an alkenyl group having 2 to 5 carbon atoms and yet more preferably represents an alkenyl group having 2 or 3 carbon atoms. In the compound represented by general formula (III-F), $R^5$ and $R^6$ preferably each independently represent an alkyl group having 1 to 5 carbon atoms or an alkenyl group having 2 to 5 carbon atoms.

The liquid crystal composition of the present invention preferably contains a compound represented by general formula (III-A), which is a fourth component.

The liquid crystal composition of the present invention preferably contains a compound represented by general formula (III-F), which is a fourth component.

The liquid crystal composition of the present invention preferably simultaneously contains a compound represented by general formula (III-A) and a compound represented by general formula (III-F) which are fourth components.

The compound represented by general formula (III-A) preferably has $R^5$ representing an alkenyl group having 2 carbon atoms and $R^6$ representing an alkyl group having 3 carbon atoms.

The fourth component content is preferably 1% by mass to 40% by mass, preferably 5% by mass to 40% by mass, preferably 10% by mass to 40% by mass, and more preferably 20% by mass to 40% by mass.

The compound represented by general formula (III-F) preferably has $R^5$ representing an alkyl group having 2 to 5 carbon atoms and $R^6$ representing an alkyl group having 1 to 3 carbon atoms.

The fourth component content is preferably 1% by mass to 40% by mass and preferably 5% by mass to 40% by mass.

One or more compounds represented by general formula (V) may also be contained as additional components.

[Chem. 11]

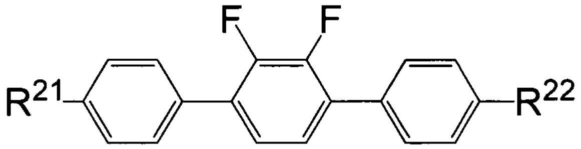

(V)

In the formula $R^{21}$ and $R^{22}$ each independently represent an alkyl group having 1 to 8 carbon atoms, an alkoxyl group having 1 to 8 carbon atoms, an alkenyl group having 2 to 8 carbon atoms, or an alkenyloxy group having 2 to 8 carbon atoms. An alkyl group having 1 to 5 carbon atoms or an alkenyl group having 2 to 5 carbon atoms is preferable.

One or more compounds represented by general formula (VIII-a), general formula (VIII-c), or general formula (VIII-d) may be contained as additional components.

[Chem. 12]

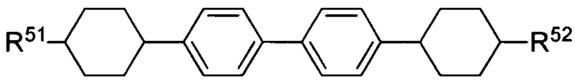

(VIII-a)

(In the formula, $R^{51}$ and $R^{52}$ each independently represent an alkyl group having 1 to 5 carbon atoms, an alkenyl group having 2 to 5 carbon atoms, or an alkoxy group having 1 to 4 carbon atoms.)

[Chem. 13]

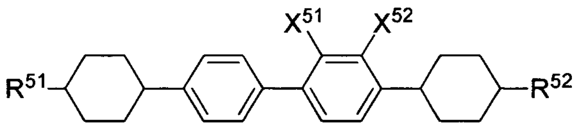

(VIII-c)

(In the formula, $R^{51}$ and $R^{52}$ each independently represent an alkyl group having 1 to 5 carbon atoms, an alkenyl group having 2 to 5 carbon atoms, or an alkoxy group having 1 to 4 carbon atoms; $X^{51}$ and $X^{52}$ each independently represent a fluorine atom or a hydrogen atom; and at least one selected from $X^{51}$ and $X^{52}$ represents a fluorine atom) .

[Chem. 14]

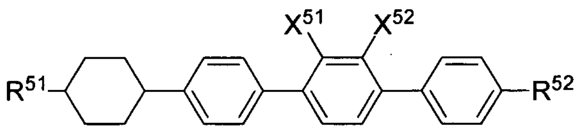

(VIII-d)

(In the formula, $R^{51}$ and $R^{52}$ each independently represent an alkyl group having 1 to 5 carbon atoms, an alkenyl group having 2 to 5 carbon atoms, or an alkoxy group having 1 to 4 carbon atoms; $X^{51}$ and $X^{52}$ each independently represent a fluorine atom or a hydrogen atom; and at least one selected from $X^{51}$ and $X^{52}$ represents a fluorine atom) .

One or more compounds represented by general formula (V-9.1) to general formula (V-9.3) may be contained as additional components.

[Chem. 15]

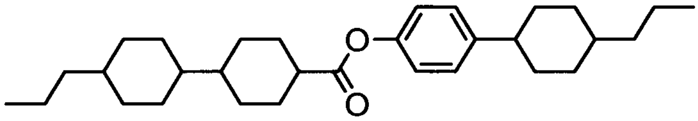

(V-9.1)

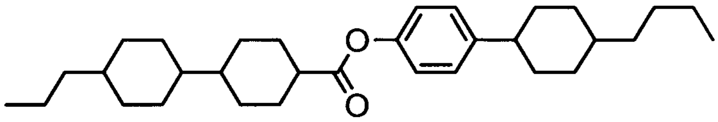

(V-9.2)

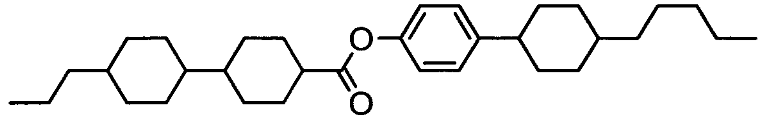

(V-9.3)

The liquid crystal composition of the present invention preferably simultaneously contains compounds represented by formula (I-1), formula (I-2), general formula (II-A1), and general formula (III-A), preferably simultaneously contains compounds represented by formula (I-1), formula (I-2), general formula (II-A3), and general formula (III-A), preferably simultaneously contains compounds represented by formula (I-1), formula (I-2), general formula (II-A4), and general formula (III-A), preferably simultaneously contains compounds represented by formula (I-1), formula (I-2), general formula (II-B1), and general formula (III-A), preferably simultaneously contains compounds represented by formula (I-1), formula (I-2), general formula (II-B3), and general formula (III-A), preferably simultaneously contains compounds represented by formula (I-1), formula (I-2), general formula (II-B4), and general formula (III-A), and preferably simultaneously contains compounds represented by formula (I-1), formula (I-2), general formula (II-B5), and general formula (III-A).

The liquid crystal composition of the present invention more preferably simultaneously contains compounds represented by formula (I-1), formula (I-2), general formula (II-A1), general formula (II-B1), and general formula (III-A), more preferably simultaneously contains compounds represented by formula (I-1), formula (I-2), general formula (II-A3), general formula (II-B5), and general formula (III-A), more preferably simultaneously contains compounds represented by formula (I-1), formula (I-2), general formula (II-A1), general formula (II-B4), and general formula (III-A), and more preferably simultaneously contains compounds represented by formula (I-1), formula (I-2), general formula (II-A1), general formula (II-B5), and general formula (III-A).

The liquid crystal composition of the present invention more preferably simultaneously contains compounds represented by formula (I-1), formula (I-2), general formula (II-A4), general formula (II-B5), and general formula (III-H), more preferably simultaneously contains compounds represented by formula (I-1), formula (I-2), general formula (II-A1), general formula (II-B1), and general formula (III-H), and more preferably simultaneously contains compounds represented by formula (I-1), formula (I-2), general formula (II-A1), general formula (II-B1), general formula (II-B3), and general formula (III-H).

The total content of the first component, the second component, the third component, and the fourth component in the liquid crystal composition of the present invention is preferably 70% to 100% by mass, more preferably 80% to 100% by mass, and most preferably 85% to 100% by mass.

The dielectric anisotropy ($\Delta\varepsilon$) of the liquid crystal composition of the present invention at 25°C is -2.0 to -8.0, preferably -2.0 to -6.0, more preferably -2.0 to -5.0, and most preferably -2.5 to -4.0.

The refractive index anisotropy ($\Delta n$) of the liquid crystal composition of the present invention at 20°C is 0.08 to 0.14, preferably 0.09 to 0.13, and more preferably 0.09 to 0.12. Specifically, the refractive index anisotropy ($\Delta n$) is preferably 0.10 to 0.13 for a small cell gap and 0.08 to 0.10 for a large cell gap.

The viscosity ($\eta$) of the liquid crystal composition of the present invention at 20°C is 10 to 30 mPa·s, preferably 10 to 25 mPa·s, and more preferably 10 to 22 mPa·s.

The rotational viscosity ($\gamma_1$) of the liquid crystal composition of the present invention at 20°C is 60 to 130 mPa·s, more preferably 60 to 110 mPa·s, and most preferably 60 to 100 mPa·s.

The nematic phase-isotropic liquid phase transition temperature ($T_{ni}$) of the liquid crystal composition of the present invention is 60°C to 120°C, more preferably 70°C to 100°C, and yet more preferably 70°C to 85°C.

The liquid crystal composition of the present invention may contain, in addition to the compounds described above, a common nematic liquid crystal, a smectic liquid crystal, a cholesteric liquid crystal, an antioxidant, an ultraviolet light absorber, a light stabilizer (HALS), an infrared absorber, a polymerizable monomer, and the like.

For example, the liquid crystal composition may contain 0.01% to 2% by mass of a polymerizable compound, such as a biphenyl derivative or a terphenyl derivative, as a polymerizable monomer. More specifically, one or more polymerizable compounds represented by general formula (M):

[Chem. 16]

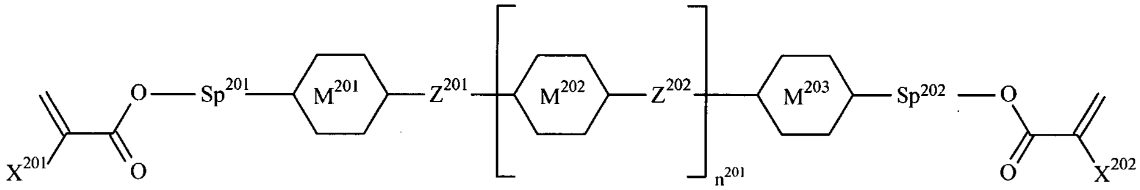

(M)

may be contained in the liquid crystal composition.

In general formula (M), $X^{201}$ and $X^{202}$ each independently represent a hydrogen atom, a methyl group, or a $-CF_3$ group. A diacrylate derivative with $X^{201}$ and $X^{202}$ both representing a hydrogen atom and a dimethacrylate derivative with $X^{201}$ and $X^{202}$ both representing a methyl group are preferable. A compound in which one represents a hydrogen atom and the other represents a methyl group is also preferable. While suitable compounds may be used according to the usage, the polymerizable compound represented by general formula (M) preferably has at least one methacrylate derivative or two methacrylate derivatives if the usage is for PSA display devices.

In general formula (M), $Sp^{201}$ and $Sp^{202}$ each independently represent a single bond, an alkylene group having 1 to 8 carbon atoms, or $-O-(CH_2)_s-$ (where s represents an integer of 2 to 7 and the oxygen atom is to bond to a ring). At least one selected from $Sp^{201}$ and $Sp^{202}$ preferably represents a single bond for PSA mode liquid crystal display devices, a compound in which both $Sp^{201}$ and $Sp^{202}$ represent a single bond is preferable, and a compound with one of $Sp^{201}$ and $Sp^{202}$ representing a single bond and the other representing an alkylene group having 1 to 8 carbon atoms or $-O-(CH_2)_s-$ is preferable. In such a case, an alkylene group having 1 to 4 carbon atoms is preferable and s is preferably 1 to 4.

In general formula (M), ring $M^{201}$, ring $M^{202}$, and ring $M^{203}$ each independently represent a trans-1,4-cyclohexylene group (one $-CH_2-$ or two or more nonadjacent $-CH_2-$ in the group may each be substituted with -0- or -S-), a 1,4-phenylene group (one -CH= or two or more nonadjacent -CH= in the group may each be substituted with -N=), a 1,4-cyclohexenylene group, a 1,4-bicyclo[2.2.2]octylene group, a piperidine-1,4-diyl group, a naphthalene-2,6-diyl group, a decahydronaphthalene-2,6-diyl group, or a 1,2,3,4-tetrahydronaphthalene-2,6-diyl group, and hydrogen atoms in the group may be each independently substituted with a fluorine atom, a $-CF_3$ group, an alkyl group having 1 to 10 carbon atoms, an alkoxyl group having 1 to 10 carbon atoms, or any one of groups represented by formula (R-1) to formula (R-15):

[Chem. 17]

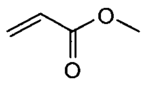
(R-1)

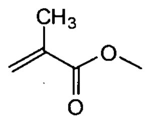
(R-2)

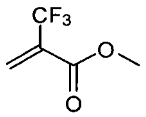
(R-3)

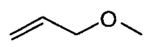
(R-4)

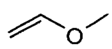
(R-5)

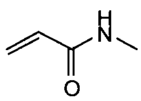
(R-6)

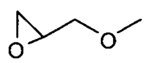
(R-7)

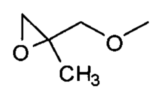
(R-8)

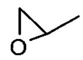
(R-9)

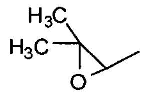
(R-10)

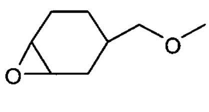
(R-11)

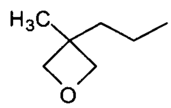
(R-12)

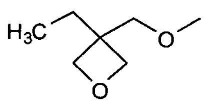
(R-13)

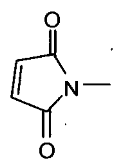
(R14)

HS—
(R-15)

In general formula (M), $Z^{201}$ and $Z^{202}$ each independently represent $-OCH_2-$, $-CH_2O-$, -COO-, -OCO-, $-CF_2O-$, $-OCF_2-$, - $CH_2CH_2-$, $-CF_2CF_2-$, -CH=CH-COO-, -CH=CH-OCO-, -COO-CH=CH-, - OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, $-CY^1=CY^2-$ (in the formula, $Y^1$ and $Y^2$ each independently represent a fluorine atom or a hydrogen atom), -C≡C-, or a single bond but preferably each independently represent -COO-, -OCO-, - CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, -C≡C-, or a single bond, and more preferably each independently represent -COO-, -OCO-, -CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, or a single bond.

In general formula (M), $n^{201}$ represents 0, 1, or 2 and preferably represents 0 or 1. However, when there are two or more rings $M^{202}$ and two or more $Z^{202}$, they may each be the same or different.

At least one polymerizable compound represented by general formula (M) may be contained. Preferably one to five and more preferably one to three polymerizable compounds represented by general formula (M) are contained. The compounds represented by general formula (M) are preferably contained in an amount of 0.01% to 2.00% by mass, more preferably 0.05% to 1.00% by mass, and yet more preferably 0.10% to 0.50% by mass.

More specifically, when $n^{201}$ in general formula (M) is 0, the ring structure between $Sp^{201}$ and $Sp^{202}$ is preferably one represented by any one of formula (XXa-1) to formula (XXa-5), more preferably formula (XXa-1) to formula (XXa-3), and yet more preferably formula (XXa-1) and formula (XXa-2). Each of the two ends in each formula is to bond to $Sp^{201}$ or $Sp^{202}$.

[Chem. 18]

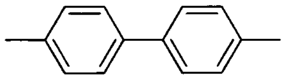

(XXa-1)

[Chem. 19]

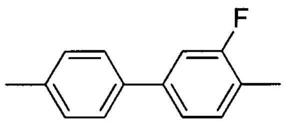

(XXa-2)

[Chem. 20]

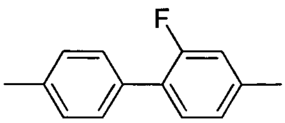

(XXa-3)

[Chem. 21]

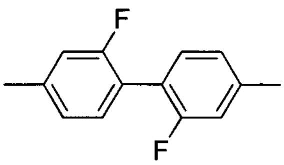

(XXa-4)

[Chem. 22]

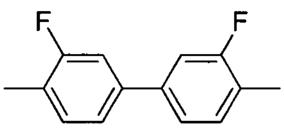

(XXa-5)

The polymerizable compounds represented by general formula (M) including these skeletons exhibit optimum anchoring force for PSA-mode liquid crystal display devices after polymerization and a satisfactory alignment state is yielded. Thus, display nonuniformity is suppressed or prevented.

In view of the above, compounds represented by formula (XX-1) to general formula (XX-10) are preferable as the polymerizable monomer. Compounds represented by formula (XX-1) to formula (XX-4) are more preferable.

[Chem. 23]

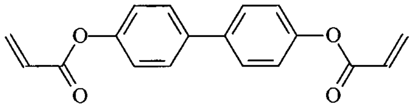
(XX-1)

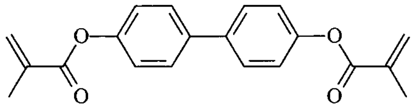
(XX-2)

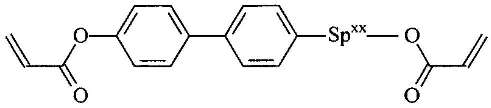
(XX-5)

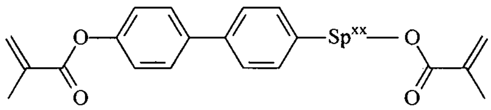
(XX-6)

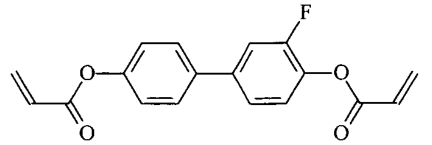
(XX-3)

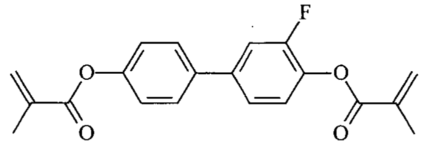
(XX-4)

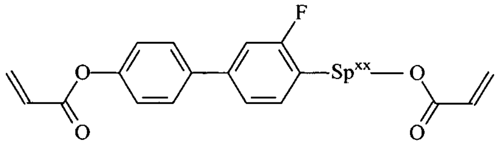
(XX-7)

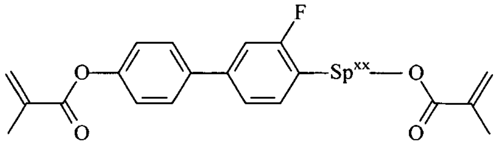
(XX-8)

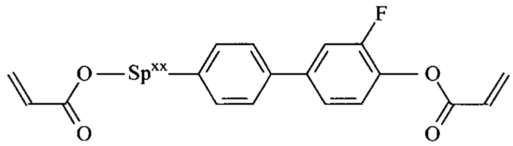
(XX-9)

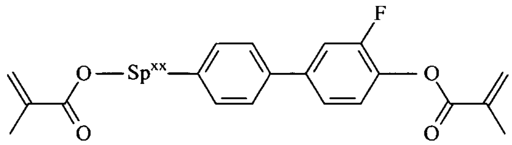
(XX-10)

In formula (XX-1) to general formula (XX-10), $Sp^{xx}$ represents an alkylene group having 1 to 8 carbon atoms or - $O-(CH_2)_s-$ (in the formula, s represents an integer of 2 to 7 and the oxygen atom is to bond to a ring).

Hydrogen atoms in the 1,4-phenylene groups in formula (XX-1) to general formula (XX-10) may each be substituted with any one selected from -F, -Cl, $-CF_3$, $-CH_3$, and formula (R-1) to formula (R-15).

When $n^{201}$ in general formula (M) is 1, polymerizable compounds represented by formula (M31) to formula (M48) are preferable, for example.

[Chem. 24]

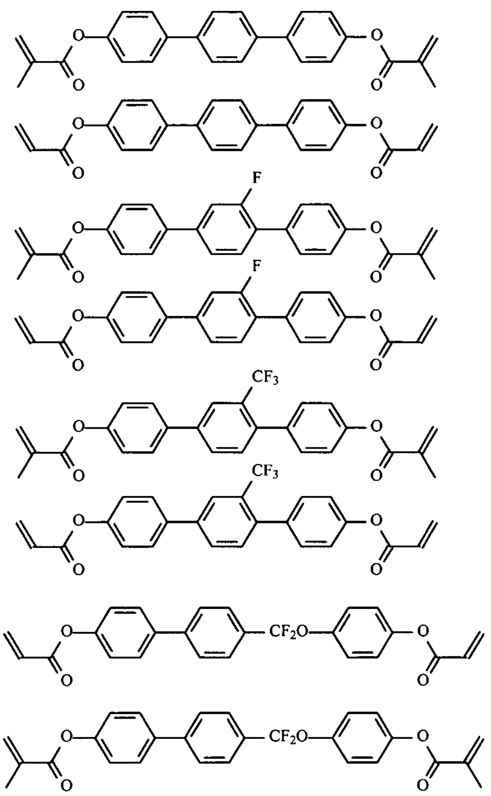

(M31)

(M32)

(M33)

(M34)

(M35)

(M36)

(M37)

(M38)

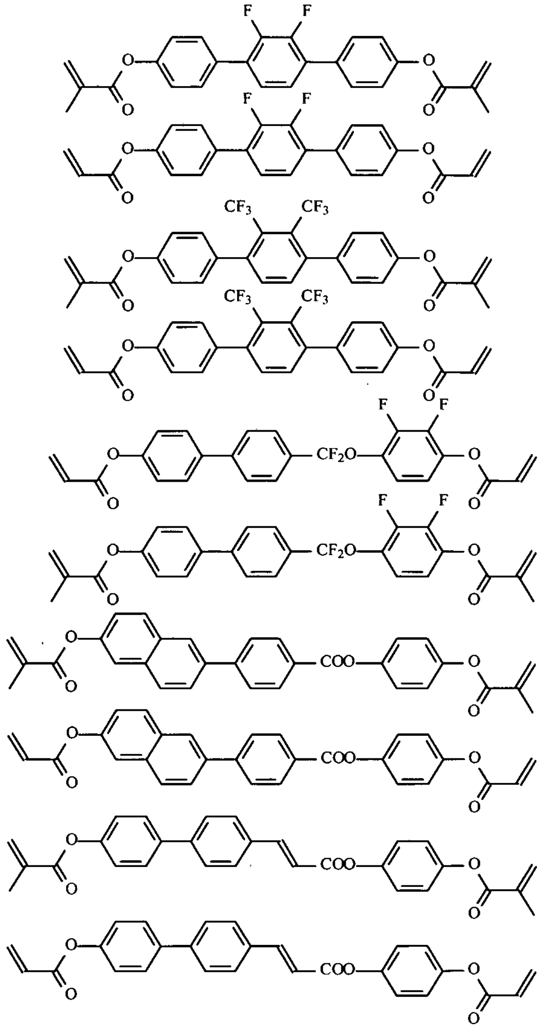

(M39)

(M40)

(M41)

(M42)

(M43)

(M44)

(M45)

(M46)

(M47)

(M48)

Hydrogen atoms in the 1,4-phenylene groups and naphthalene groups in formula (M31) to formula (M48) may each be substituted with any one selected from -F, -Cl, $-CF_3$, $-CH_3$, and formula (R-1) to formula (R-15).

The polymerizable compounds represented by general formula (M) including these skeletons exhibit optimum anchoring force for PSA-mode liquid crystal display devices after polymerization and a satisfactory alignment state is yielded. Thus, display nonuniformity is suppressed or prevented.

When $n^{201}$ in general formula (M) is 1 and two or more compounds represented by formula (R-1) or formula (R-2) are contained, polymerizable compounds represented by formula (M301) to formula (M316) are preferable, for example.

[Chem. 25]

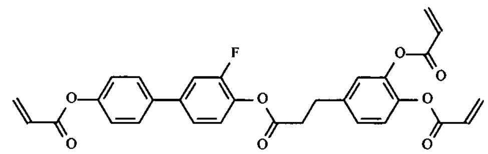
(M301)

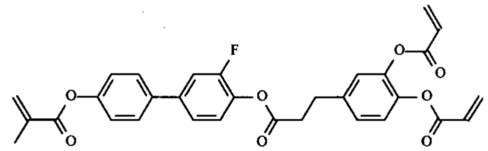
(M302)

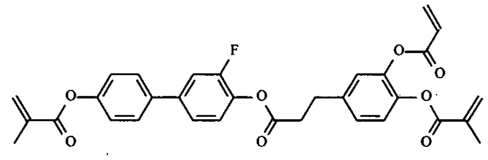
(M303)

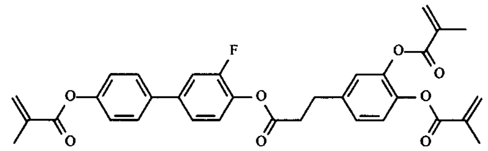
(M304)

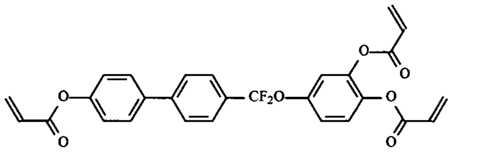
(M305)

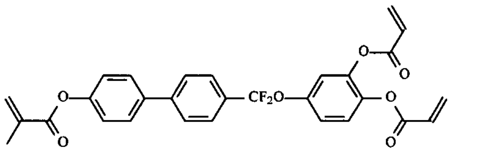
(M306)

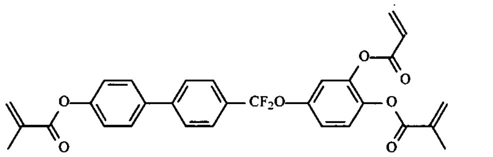
(M307)

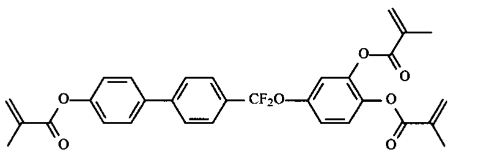
(M308)

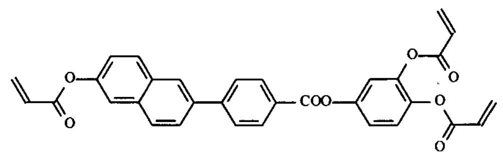
(M309)

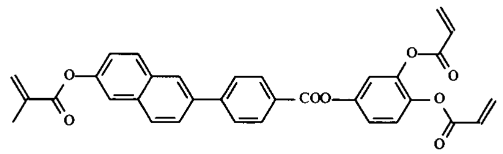
(M310)

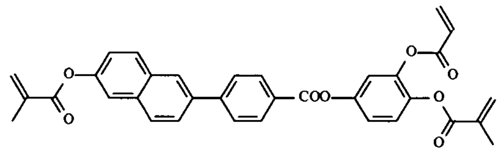
(M311)

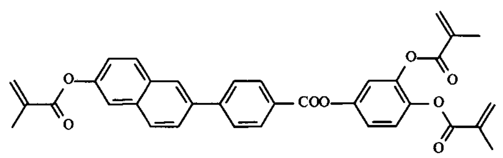
(M312)

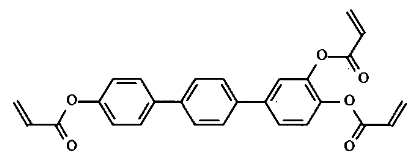
(M313)

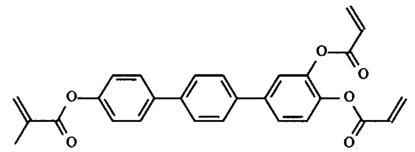
(M314)

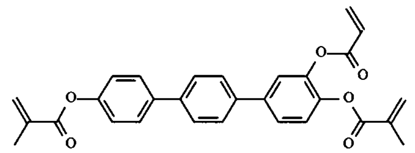
(M315)

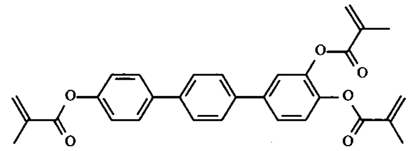
(M316)

Hydrogen atoms in the 1,4-phenylene groups and naphthalene groups in formula (M301) to formula (M316) may each be substituted with any one selected from -F, -Cl, $-CF_3$, and $-CH_3$.

Polymerizable compounds represented by formula (Ia-1) to formula (Ia-31) are preferable as the polymerizable compound represented by general formula (M), for example.

[Chem. 26]

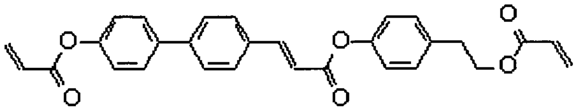

(Ia－1)

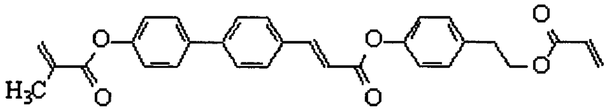

(Ia－2)

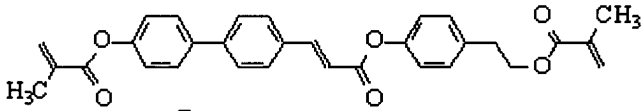

(Ia－3)

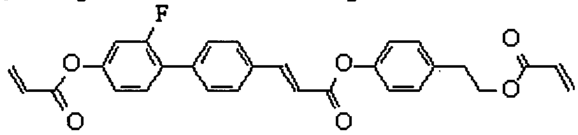

(Ia－4)

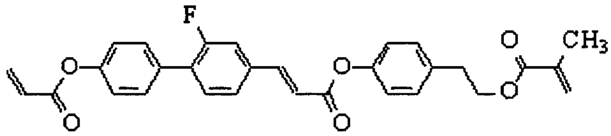

(Ia－5)

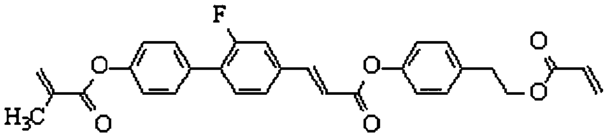

(Ia－6)

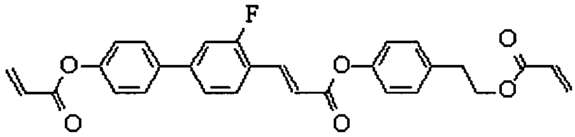

(Ia－7)

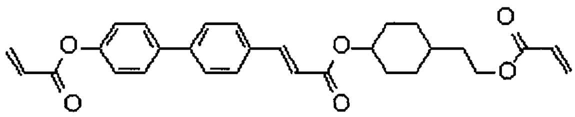

(Ia－8)

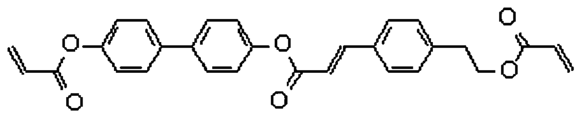

(Ia－9)

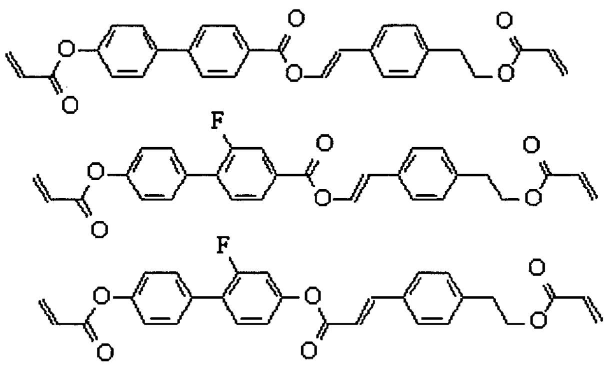

(Ia－10)

(Ia－11)

(Ia－12)

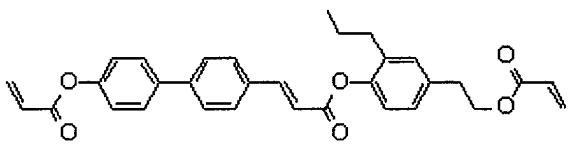

(Ia－13)

[Chem. 27]

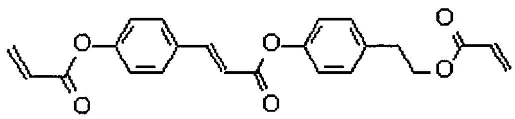

(Ia-14)

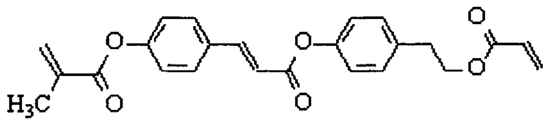

(Ia-15)

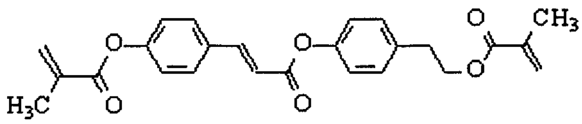

(Ia-16)

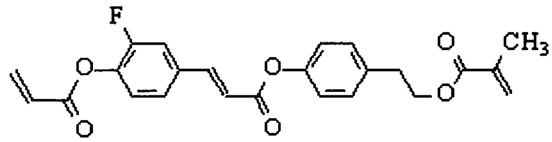

(Ia-17)

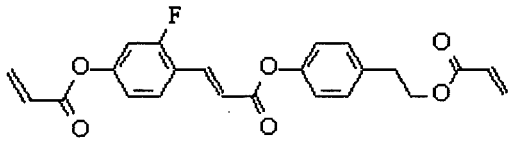

(Ia-18)

[Chem. 28]

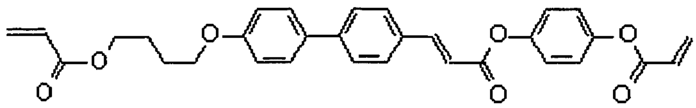
(Ia-19)

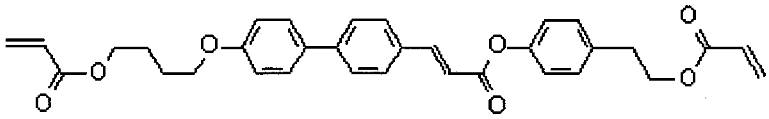
(Ia-20)

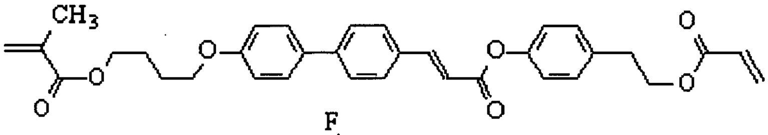
(Ia-21)

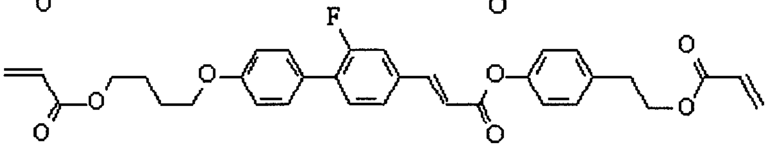
(Ia-22)

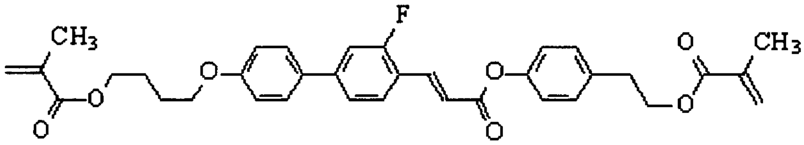
(Ia-23)

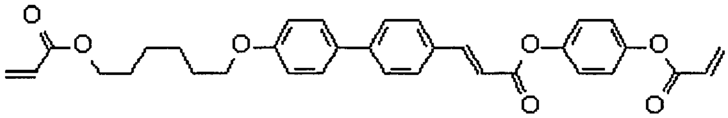
(Ia-24)

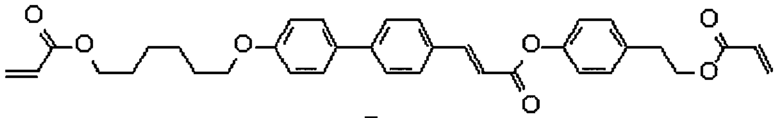
(Ia-25)

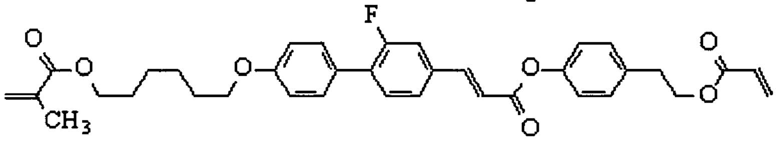
(Ia-26)

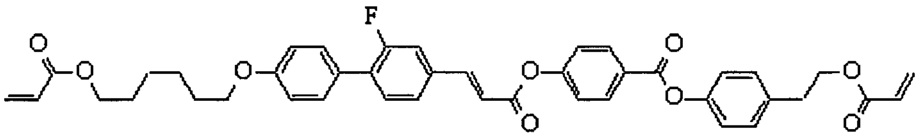
(Ia-27)

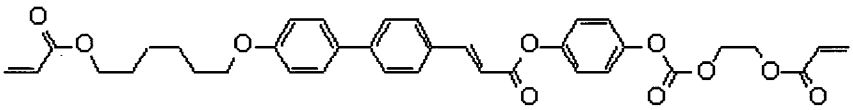
(Ia-28)

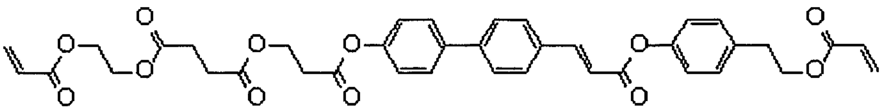
(Ia-29)

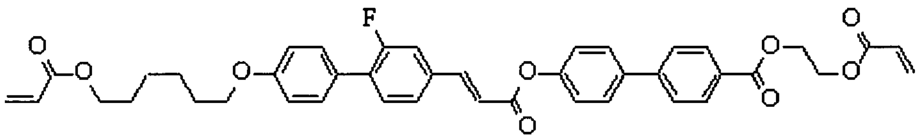
(Ia-30)

[Chem. 29]

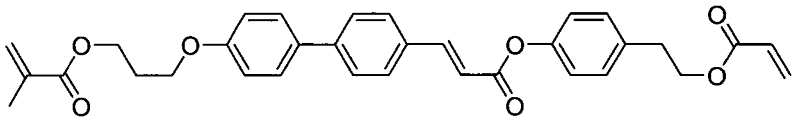

( Ia-31 )

The liquid crystal composition of the present invention more preferably contains one or more polymerizable monomers selected from those described above as the polymerizable monomer. Yet more preferably, the liquid crystal composition contains one or more polymerizable monomers represented by general formula (XX-1), general formula (XX-2), general formula (XX-4), general formula (M-302), and general formula (M31).

The liquid crystal composition of the present invention can contain an antioxidant. Hindered phenol compounds represented by general formula (H-1) to general formula (H-4) are preferable.

[Chem. 30]

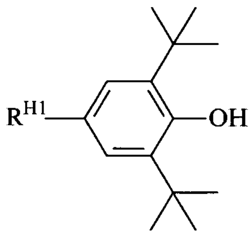

(H-1)

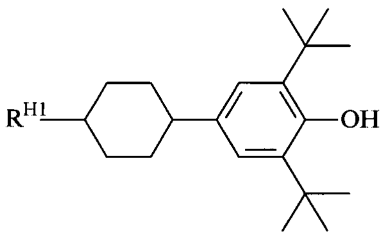

(H-2)

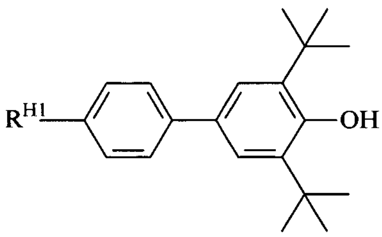

(H-3)

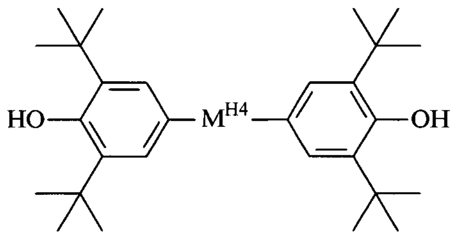

(H-4)

In general formula (H-1) to general formula (H-4), $R^{H1}$ represents an alkyl group having 1 to 10 carbon atoms, an alkoxyl group having 1 to 10 carbon atoms, an alkenyl group having 2 to 10 carbon atoms, or an alkenyloxy group having 2 to 10 carbon atoms; one $-CH_2-$ or two or more nonadjacent $-CH_2-$ in the group may each independently be substituted with -O- or -S-; and one or more hydrogen atoms in the group may each independently be substituted with a fluorine atom or a chlorine atom. In particular, an alkyl group having 2 to 7 carbon atoms, an alkoxyl group having 2 to 7 carbon atoms, an alkenyl group having 2 to 7 carbon atoms, or an alkenyloxy group having 2 to 7 carbon atoms is preferable, and an alkyl group having 3 to 7 carbon atoms or an alkenyl group having 2 to 7 carbon atoms is more preferable.

In general formula (H-4), $M^{H4}$ represents an alkylene group having 1 to 15 carbon atoms (one or more $-CH_2-$ in the alkylene group may be substituted with -O-, -CO-, -COO-, or - OCO- provided that the oxygen atoms are not directly adjacent to each other), $-OCH_2-$, $-CH_2O-$, -COO-, -OCO-, $-CF_2O-$, $-OCF_2-$, $-CF_2CF_2-$, -CH=CH-COO-, -CH=CH-OCO-, -COO-CH=CH-, -OCO-CH=CH-, -CH=CH-, -C≡C-, a single bond, a 1,4-phenylene group (any hydrogen atom in the 1,4-phenylene group may be substituted with a fluorine atom), or a trans-1,4-cyclohexylene group. $M^{H4}$ preferably represents an alkylene group having 1 to 14 carbon atoms. The number of carbon atoms is preferably 2 to 12, more preferably 3 to 10, yet more preferably 4 to 10, yet more preferably 5 to 10, and most preferably 6 to 10 since the number of carbon atoms is preferably large in view of volatility but not excessively large in view of viscosity.

In general formula (H-1) to general formula (H-4), one - CH= or two or more nonadjacent -CH= in the 1,4-phenylene group may each be substituted with -N=. The hydrogen atoms in the 1,4-phenylene group may each independently be substituted with a fluorine atom or a chlorine atom.

In general formula (H-1) to general formula (H-4), one - $CH_2$- or two or more nonadjacent -$CH_2$- in the 1,4-phenylene group may each independently be substituted with -O- or -S-. The hydrogen atoms in the 1,4-cyclohexylene group may each independently be substituted with a fluorine atom or a chlorine atom.

Specific examples thereof are those represented by formula (H-11) to formula (H-15).

[Chem. 31]

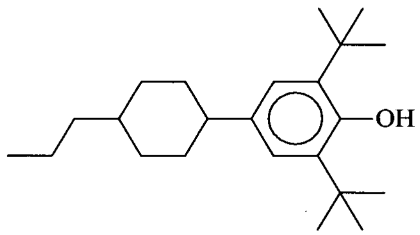

(H-11)

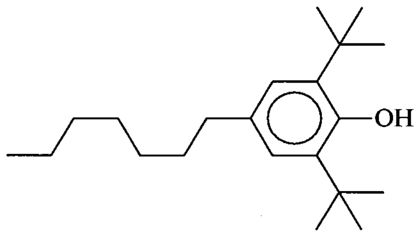

(H-12)

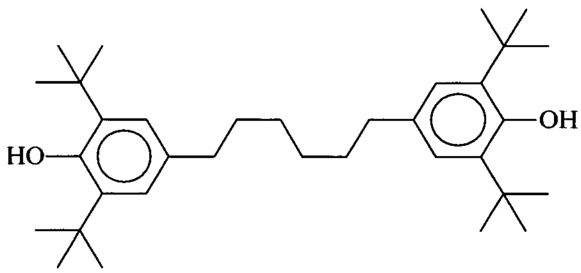

(H-13)

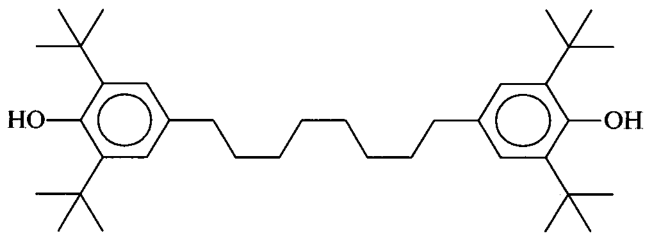

(H-14)

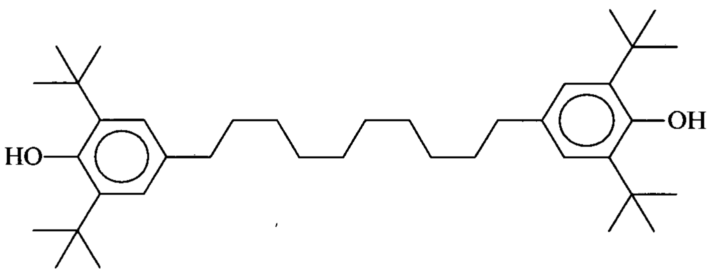

(H-15)

More preferably, the liquid crystal composition of the present invention contains one or more antioxidants represented by formula (H-11) to formula (H-15) as the antioxidants.

The liquid crystal composition of the present invention may contain 1 ppm by mass or more, preferably 10 ppm by mass or more, preferably 20 ppm by mass or more, and preferably 50 ppm by mass or more of the antioxidant. The upper limit of the antioxidant content is 10000 ppm by mass, preferably 1000 ppm by mass, preferably 500 ppm by mass, and preferably 100 ppm by mass.

The liquid crystal display device that uses the liquid crystal composition of the present invention has no or less display failures, high display quality, and high response speed. In particular, the liquid crystal display device can be used in active-matrix-drive VA mode, PSVA mode, PSA mode, IPS mode, FFS mode, or ECB mode.

EXAMPLES

The present invention will now be described in further detailed through examples below which do not limit the present invention. In the compositions of Examples and Comparative Examples below, % means % by mass. "Examples" 2, 3, and 5 are not according to the invention and described only for reference and/or comparison.

In Examples, following abbreviations are used to describe compounds:

(Side chain)

-n: $-C_nH_{2n+1}$ straight-chain alkyl group having n carbon atoms
n-: $C_nH_{2n+1}$- straight-chain alkyl group having n carbon atoms
-On: $-OC_nH_{2n+1}$ straight-chain alkoxyl group having n carbon atoms
nO-: $C_nH_{2n+1}O$- straight-chain alkoxyl group having n carbon atoms
-V: $-CH=CH_2$
V-: $CH_2=CH-$
-V1: $-CH=CH-CH_3$
1V-: $CH_3-CH=CH-$
-2V: $-CH_2-CH_2-CH=CH_3$
V2-: $CH_3=CH-CH_2-CH_2-$
-2V1: $-CH_2-CH_2-CH=CH-CH_3$
1V2-: $CH_3-CH=CH-CH_2-CH_2$
(Bonding group)
-CF20-: $-CF_2-O-$
-OCF2-: $-O-CF_2-$
-1O-: $-CH_2-O-$
-O1-: $-O-CH_2-$
-COO-: -COO-

(Ring structure)

[Chem. 32]

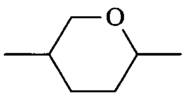
Py

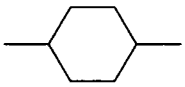
Cy

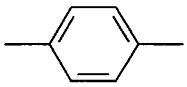
Ph

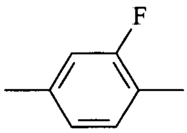
Ph1

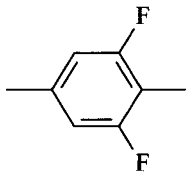
Ph2

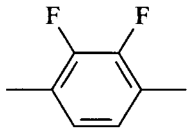
Ph5

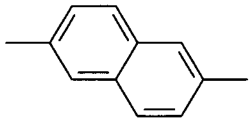
Np

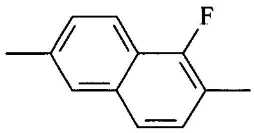
Np1

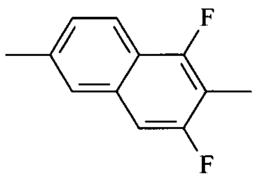
Np2

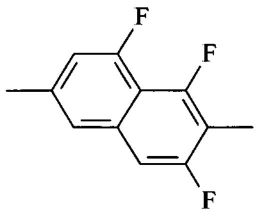
Np3

Following properties were measured in Examples.

$T_{ni}$: nematic phase-isotropic liquid phase transition temperature (°C)
$\Delta n$: refractive index anisotropy at 20°C
$\Delta\varepsilon$: dielectric anisotropy at 25°C
$\eta$: viscosity at 20°C (mPa·s)
$\gamma_1$: rotational viscosity (mPa·s) at 20°C
$K_{33}$: elastic modulus $K_{33}$ (pN) at 20°C

(Comparative Example 1, Example 1, Example 2, and Example 3)

Liquid crystal compositions LC-A (Comparative Example 1), LC-1 (Example 1), LC-2 (Example 2), and LC-3 (Example 3) were prepared and physical properties thereof were measured. The constitutions of the liquid crystal compositions and the observed physical properties are shown in Table 1.

[Table 1]

| | | Comparative Example 1 | Example 1 | Example 2* | Example 3* |
|---|---|---|---|---|---|
| | | LC-A | LC-1 | LC-2 | LC-3 |
| 3-Cy-Cy-2 | Formula (I-1) | | 13 | 9 | 9 |
| 3-Cy-Cy-V1 | Formula(I-2) | | 10 | 10 | 10 |
| 3-Cy-Cy-V | General formula (III-A) | 12 | | 10 | 12 |
| 3-Cy-Cy-4 | General formula (III-A) | 8 | 5 | | |
| 3-Cy-Ph-O1 | General formula (III-D) | 6 | | | |
| 3-Cy-Ph-O2 | General formula (III-D) | 4 | | | |
| 3-Ph-Ph-1 | General formula (III-F) | 10 | 3 | 8 | 11 |
| 5-Ph-Ph-1 | General formula (III-F) | 5 | 14 | 7 | 2 |
| 3-Cy-Cy-Ph-1 | General formula (III-G) | 7 | 3 | 4 | 5 |
| 3-Cy-Ph-Ph-2 | General formula (III-H) | 2 | | 2 | |
| V-Cy-Ph-Ph-3 | General formula (III-H) | 3 | 6 | 5 | 5 |
| 3-Cy-1O-Ph5-O1 | General formula (II-A1) | 2 | | | |
| 3-Cy-1O-Ph5-O2 | General formula (II-A1) | 6 | 11 | 12 | 4 |

(continued)

| | | Comparative Example 1 | Example 1 | Example 2* | Example 3* |
|---|---|---|---|---|---|
| | | LC-A | LC-1 | LC-2 | LC-3 |
| 1V-Cy-1O-Ph5-O2 | General formula (II-A1) | | | | 4 |
| 2-Cy-Cy-1O-Ph5-O2 | General formula (II-B1) | 12 | 12 | 12 | 12 |
| 3-Cy-Cy-1O-Ph5-O2 | General formula (II-B1) | 12 | 12 | 12 | 12 |
| 4-Cy-Cy-1O-Ph5-O2 | General formula (II-B1) | 2 | 2 | | |
| V-Cy-Cy-1O-Ph5-O2 | General formula (II-B1) | 6 | 3 | 3 | 3 |
| 1V-Cy-Cy-1O-Ph5-O2 | General formula (II-B1) | 3 | 6 | 6 | 3 |
| 3-Cy-Ph5-O2 | General formula (II-A3) | | | | 2 |
| 3-Ph-Ph5-O2 | General formula (II-A4) | | | | 2 |
| 1V3-Ph-Ph5-Ph-3V1 | General formula (V) | | | | 2 |
| 3-Ph-Ph5-Ph-2 | General formula (V) | | | | 2 |
| Total | | 100 | 100 | 100 | 100 |
| Tni [°C] | | 75.8 | 75.5 | 75.1 | 75.9 |
| $\Delta n$ | | 0.100 | 0.100 | 0.100 | 0.101 |
| $\eta$ [mPa·s] | | 17.8 | 15.8 | 14.7 | 14.5 |
| $\gamma 1$ [mPa·s] | | 126 | 113 | 107 | 105 |
| $\Delta\varepsilon$ | | -3.0 | -3.1 | -3.0 | -3.0 |
| K33 [pN] | | 14.1 | 14.3 | 14.5 | 15.2 |
| $\gamma 1$/K33 | | 8.9 | 7.9 | 7.4 | 6.9 |
| *for reference and/or comparison only | | | | | |

The liquid crystal compositions LC-1, LC-2, and LC-3 had low viscosity ($\eta$), low rotational viscosity ($\gamma_1$), high elastic modulus ($K_{33}$) , and $\gamma_1/K_{33}$ of 7.9, 7.4, and 6.9, respectively, which were smaller than that of liquid crystal composition LC-A of Comparative Example.

Response speed of the liquid crystal display devices that used these liquid crystal compositions was measured. LC-1, LC-2, and LC-3 exhibited sufficiently high response speed, which was faster than LC-A by at least 10%. The cell thickness was 3.5 $\mu$m, the alignment film was JALS2096, and the measurement conditions for response speed were Von: 5.5 V, Voff: 1.0 V, measurement temperature: 20°C. DMS301 produced by AUTRONIC-MELCHERS was used in measurement.

A PSVA-mode liquid crystal display device was produced by using a liquid crystal composition containing 99.6% by mass of LC-1 and 0.4% by mass of a polymerizable monomer represented by formula (XX-2). The device had no display failures but sufficiently high response speed.

A PSVA-mode liquid crystal display device was produced by using a liquid crystal composition containing 99.6% by mass of LC-1 and 0.4% by mass of a polymerizable monomer represented by formula (XX-4). The device had no display failures but sufficiently high response speed.

A PSVA-mode liquid crystal display device was produced by using a liquid crystal composition containing 99.6% by mass of LC-1 and 0.4% by mass of a polymerizable monomer represented by formula (M-302). The device had no display failures but sufficiently high response speed.

A PSVA-mode liquid crystal display device was produced by using a liquid crystal composition containing 99.6% by mass of LC-1, 0.3% by mass of a polymerization monomer represented by formula (XX-4), and 0.1% by mass of a polymerization monomer represented by formula (Ia-31). The device had no display failures but sufficiently high response speed.

PSVA-mode liquid crystal display devices were prepared in the same manner as described above by using LC-2 and LC-3 and polymerizable monomers. The devices had no display failures but sufficiently high response speed.

(Comparative Example 2, Example 4, and Example 5)

Liquid crystal compositions LC-B (Comparative Example 2), LC-4 (Example 4), and LC-5 (Example 5) were prepared and physical properties thereof were measured. The constitutions of the liquid crystal compositions and the physical properties are shown in Table 2.

[Table 2]

| | | Comparative Example 2 | Example 4 | Example 5* |
|---|---|---|---|---|
| | | LC-B | LC-4 | LC-5 |
| 3-Cy-Cy-2 | Formula (I-1) | 18 | 14 | 9 |
| 3-Cy-Cy-V1 | Formula(I-2) | - | 8 | 11 |
| 3-Cy-1O-Ph5-O2 | General formula (II-A1) | - | - | 3 |
| 3-Cy-Ph5-O2 | General formula (II-A3) | 3 | 8 | 7 |
| 3-Ph-Ph5-O2 | General formula (II-A4) | 3 | 3 | - |
| 2-Cy-Cy-1O-Ph5-O2 | General formula (II-B1) | - | - | 3 |
| 2-Cy-Cy-Ph5-O1 | General formula (II-B4) | 11 | 10 | 10 |
| 2-Cy-Cy-Ph5-O2 | General formula (II-B4) | 11 | 10 | 10 |
| 3-Cy-Cy-Ph5-O2 | General formula (II-B4) | 11 | 10 | 6 |
| 3-Cy-Ph-Ph5-O2 | General formula (II-B5) | 3 | 4 | 4 |
| 3-Cy-Ph-Ph5-O3 | General formula (II-B5) | 3 | 4 | 4 |
| 3-Cy-Cy-4 | General formula (III-A) | 8 | 4 | - |
| 3-Cy-Cy-V | General formula (III-A) | 3 | 6 | 9 |
| 5-Cy-Cy-V | General formula (III-A) | 3 | - | - |
| 3-Cy-Cy-V1 | General formula (III-A) | - | - | 3 |
| 3-Ph-Ph-1 | General formula (III-F) | 5 | 3 | 3 |
| 5-Ph-Ph-1 | General formula (III-F) | - | - | - |
| 3-Cy-Cy-Ph-1 | General formula (III-G) | - | - | 2 |
| 3-Ph-Ph5-Ph-1 | General formula (V) | 6 | 4 | 5 |
| 3-Ph-Ph5-Ph-2 | General formula (V) | 10 | 10 | 6 |
| 1V2-Ph-Ph5-Ph-2V1 | General formula (V) | 2 | 2 | 5 |
| Total | | 100 | 100 | 100 |
| Tni [°C] | | 82 | 82 | 85 |
| $\Delta n$ | | 0.112 | 0.113 | 0.114 |
| $\eta$ [mPa·s] | | 21.6 | 19.5 | 18.9 |
| $\gamma 1$ [mPa·s] | | 117 | 110 | 107 |
| $\Delta\varepsilon$ | | -2.7 | -2.8 | -2.7 |
| K33 [pN] | | 12.1 | 14.5 | 14.5 |
| $\gamma 1$/K33 | | 9.7 | 7.6 | 7.4 |
| *for reference and/or comparison only | | | | |

The liquid crystal compositions LC-4 and LC-5 had low viscosity ($\eta$), low rotational viscosity ($\gamma_1$), high elastic modulus ($K_{33}$), and $\gamma_1/K_{33}$ of 7.6 and 7.4, respectively, which were smaller than that of liquid crystal composition LC-B of Comparative Example.

Response speed of the liquid crystal display devices that used these liquid crystal compositions was measured. LC-4 and LC-5 exhibited sufficiently high response speed, which was faster than LC-B by at least 15%. The cell thickness was 3.3 μm, the alignment film was JALS2096, and the measurement conditions for response speed were Von: 5.5 V, Voff: 1.0 V, measurement temperature: 20°C. DMS301 produced by AUTRONIC-MELCHERS was used in measurement.

A PSVA-mode liquid crystal display device was produced by using a liquid crystal composition containing 99.6% by mass of LC-4 and 0.4% by mass of a polymerizable monomer represented by formula (XX-1). The device had no display failures but sufficiently high response speed.

A PSVA-mode liquid crystal display device was produced by using a liquid crystal composition containing 99.6% by mass of LC-4 and 0.4% by mass of a polymerizable monomer represented by formula (XX-2). The device had no display failures but sufficiently high response speed.

A PSVA-mode liquid crystal display device was produced by using a liquid crystal composition containing 99.5% by mass of LC-4 and 0.5% by mass of a polymerizable monomer represented by formula (M-302). The device had no display failures but sufficiently high response speed.

A PSVA-mode liquid crystal display device was produced by using a liquid crystal composition containing 99.6% by mass of LC-4, 0.2% by mass of a polymerization monomer represented by formula (XX-1), and 0.2% by mass of a polymerization monomer represented by formula (XX-2). The device had no display failures but sufficiently high response speed.

A PSVA-mode liquid crystal display device was produced by using a liquid crystal composition containing 99.7% by mass of LC-5 and 0.3% by mass of a polymerizable monomer represented by formula (M31). The device had no display failures but sufficiently high response speed.

A PSVA-mode liquid crystal display device was produced by using a liquid crystal composition containing 99.65% by mass of LC-5 and 0.35% by mass of a polymerizable monomer represented by formula (M33). The device had no display failures but sufficiently high response speed.

The results described above confirm that the liquid crystal compositions of the present invention exhibit sufficiently low viscosity (η), sufficiently low rotational viscosity ($\gamma_1$), high elastic modulus ($K_{33}$), and negative dielectric anisotropy (Δε) with a large absolute value without decreasing refractive index anisotropy (Δn) and nematic phase-isotropic liquid phase transition temperature ($T_{ni}$), and that the liquid crystal display devices of VA-mode, PSVA-mode, and PSA-mode that use the liquid crystal composition have high display quality and high response speed.

## Claims

**1.** A liquid crystal composition comprising:

a compound represented by formula (I-1) as a first component

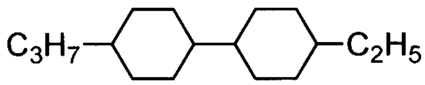

(I-1)

,

a compound represented by formula (I-2) as a second component

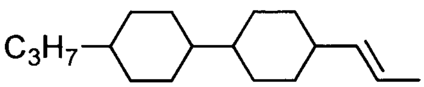

(I-2)

,

and

a compound having negative dielectric anisotropy (Δε) whose absolute value is greater than 3 as a third component,

wherein one or more compounds selected from the group consisting of compounds represented by general formula (II-1) and general formula (II-2) are contained as the third component:

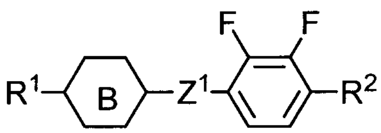

(II-1)

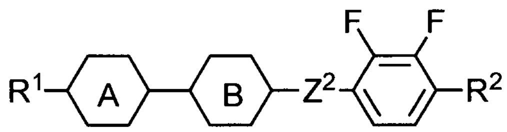

(II-2)

in the formulae,

$R^1$ represents an alkyl group having 1 to 3 carbon atoms, or an alkenyl group having 3 carbon atoms;
$R^2$ represents an alkyl group having 1 to 10 carbon atoms, an alkoxyl group having 1 to 10 carbon atoms, an alkenyl group having 2 to 10 carbon atoms, or an alkenyloxy group having 2 to 10 carbon atoms;
one $-CH_2-$ or two or more nonadjacent $-CH_2-$ in $R^1$ and $R^2$ may each independently be substituted with -O- and/or - S-; one or more hydrogen atoms in $R^1$ and $R^2$ may each independently be substituted with a fluorine atom or a chlorine atom;
ring A and ring B each independently represent a trans-1,4-cyclohexylene group, a 1,4-phenylene group, a 2-fluoro-1,4-phenylene group, a 3-fluoro-1,4-phenylene group, a 3,5-difluoro-1,4-phenylene group, a 2,3-difluoro-1,4-phenylene group, a 1,4-cyclohexenylene group, a 1,4-bicyclo[2.2.2]octylene group, a piperidine-1,4-diyl group, a naphthalene-2,6-diyl group, a decahydronaphthalene-2,6-diyl group, or a 1,2,3,4-tetrahydronaphthalene-2,6-diyl group;
and $Z^1$ and $Z^2$ each independently represent $-OCH_2-$, $- CH_2O-$, $-CF_2O-$, $-OCF_2-$, $-CH_2CH_2-$, $-CF_2CF_2-$, or a single bond, and
wherein
the liquid crystal composition contains 10% to 25% by mass of a compound represented by general formula (I-1), and
the content of compounds represented by general formula (II-1) and general formula (II-2) is 30% to 70% by mass;
with the proviso that Compositions A and B as shown in the following table are excluded:

| Composition A | | Composition B | |
|---|---|---|---|
| **Compound** | **% by mass** | **Compound** | **% by mass** |
| 3-Cy-Cy-2 | 23% | 3-Cy-Cy-2 | 22% |
| 3-Cy-Cy-4 | 6% | 5-Ph-Ph-1 | 3% |
| 3-Cy-Cy-V | 9% | 3-Cy-Cy-V | 12% |
| 3-Cy-Cy-V1 | 5% | 3-Cy-Cy-V1 | 6% |
| 3-Cy-Ph5-O2 | 7% | 3-Cy-Ph5-O2 | 7% |
| 3-Cy-Ph5-O4 | 7% | 3-Cy-Ph5-O4 | 8% |
| 2-Cy-Ph-Ph5-O2 | 6% | 2-Cy-Ph-Ph5-O2 | 6% |
| 3-Cy-Ph-Ph5-O2 | 7% | 3-Cy-Ph-Ph5-O2 | 7% |
| 3-Cy-Cy-Ph5-O3 | 7% | 3-Cy-Cy-Ph5-O3 | 7% |
| 4-Cy-Cy-Ph5-O2 | 8% | 4-Cy-Cy-Ph5-O2 | 7% |
| 5-Cy-Cy-Ph5-O2 | 7% | 5-Cy-Cy-Ph5-O2 | 7% |
| 3-Ph-Ph5-Ph-2 | 4% | 3-Ph-Ph5-Ph-2 | 4% |
| 4-Ph-Ph5-Ph-2 | 4% | 4-Ph-Ph5-Ph-2 | 4% |

wherein the following abbreviations are used to describe compounds:

| | | |
|---|---|---|
| -n | $-C_nH_{2n+1}$ | (linear alkyl group having n carbon atoms) |
| n- | $C_nH_{2n+1}-$ | (linear alkyl group having n carbon atoms) |
| -On | $-OC_nH_{2n+1}$ | (linear alkoxyl group having n carbon atoms) |

(continued)

| | |
|---|---|
| -V | $-CH=CH_2$ |
| -V1 | $-CH=CH-CH_3$ |

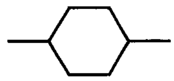

Cy

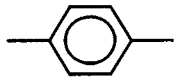

Ph

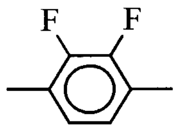

Ph5

2. The liquid crystal composition according to Claim 1, wherein the liquid crystal composition has a dielectric anisotropy ($\Delta\varepsilon$) in the range of -2.0 to -8.0 at 25°C, a refractive index anisotropy ($\Delta n$) in the range of 0.08 to 0.14 at 20°C, a viscosity ($\eta$) in the range of 10 to 30 mPa·s at 20°C, a rotational viscosity ($\gamma 1$) in the range of 60 to 130 mPa·s at 20°C, and a nematic phase-isotropic liquid phase transition temperature ($T_{ni}$) in the range of 60°C to 120°C.

3. The liquid crystal composition according to any one of Claims 1 or 2, comprising, as a fourth component, one or more compounds selected from the group consisting of compounds represented by general formula (III-A) to general formula (III-J):

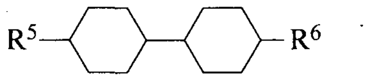

( III-A )

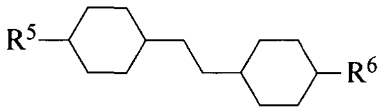

( III-B )

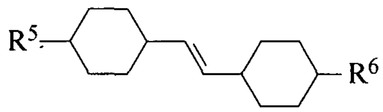

( III-C )

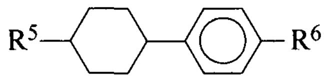

( III-D )

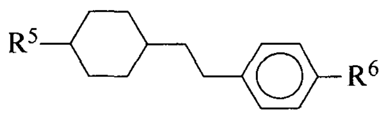

( III-E )

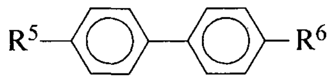

( III-F )

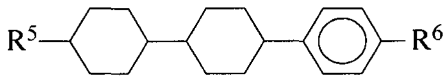

( III-G )

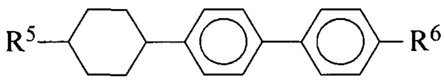

(III-H)

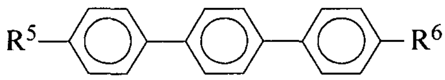

(III-I)

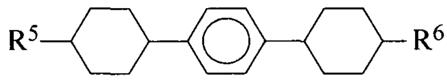

(III-J)

in the formulae, $R^5$ represents an alkyl group having 1 to 5 carbon atoms or an alkenyl group having 2 to 5 carbon atoms; $R^6$ represents an alkyl group having 1 to 5 carbon atoms, an alkoxyl group having 1 to 5 carbon atoms, an alkenyl group having 2 to 5 carbon atoms, or an alkenyloxy group having 2 to 5 carbon atoms; and compounds represented by general formula (III-A) do not include the same compounds as those represented by formula (I-1) and formula (I-2)).

4. The liquid crystal composition according to Claim 1 or 3, wherein a compound represented by general formula (II-1) and a compound represented by general formula (II-2) are contained simultaneously.

5. The liquid crystal composition according to any one of Claims 1 to 4, wherein general formula (II-1) is general formula (II-A1) to general formula (II-A4):

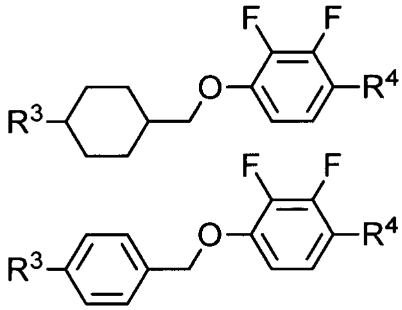

(II-A1)

(II-A2)

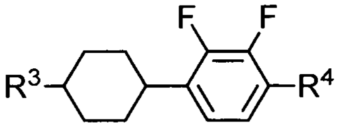

(II-A3)

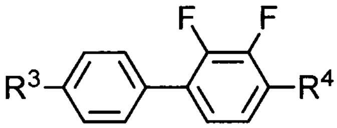

(II-A4)

in the formulae, $R^3$ and $R^4$ are each independently the same as $R^1$ and $R^2$, and general formula (II-2) is general formula (II-B1) to general formula (II-B6):

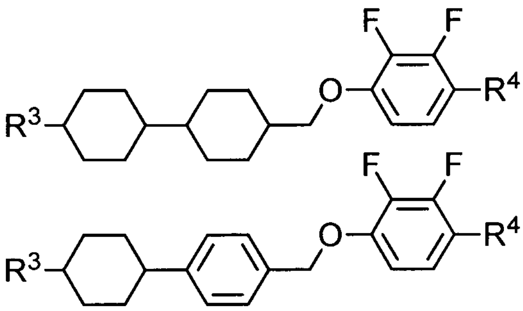

(II-B1)

(II-B2)

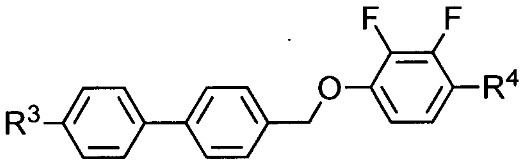

(II-B3)

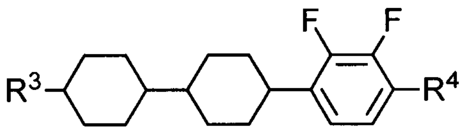

(II-B4)

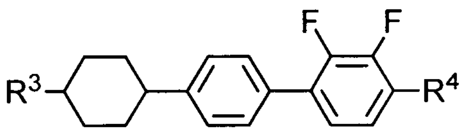

(II-B5)

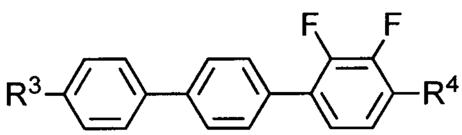

(II-B6)

in the formulae, $R^3$ and $R^4$ are each independently the same as $R^1$ and $R^2$.

**6.** The liquid crystal composition according to any one of Claims 1 to 5, comprising one or more compounds selected from the group consisting of compounds represented by general formula (II-1) and general formula (II-2) with $R^1$ representing a propenyl group.

7. The liquid crystal composition according to any one of Claims 1 to 6, comprising one or more polymerizable compounds.

8. The liquid crystal composition according to Claim 7, wherein the polymerizable compounds are represented by general formula (M):

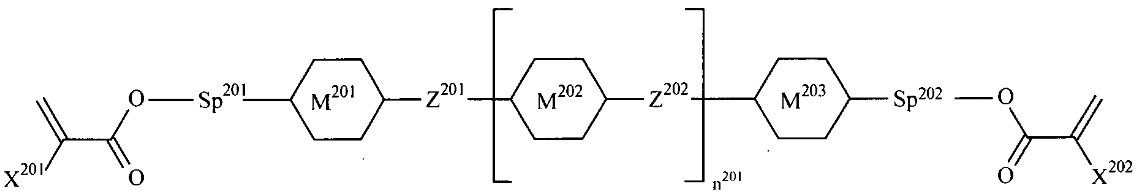

(M)

in the formula, $X^{201}$ and $X^{202}$ each independently represent a hydrogen atom, a methyl group, or a $-CF_3$ group; $Sp^{201}$ and $Sp^{202}$ each independently represent a single bond, an alkylene group having 1 to 8 carbon atoms, or $-O-(CH_2)_s-$, where s represents an integer of 2 to 7 and the oxygen atom is to bond to a ring; ring $M^{201}$, ring $M^{202}$, and ring $M^{203}$ each independently represent a trans-1,4-cyclohexylene group; one $-CH_2-$ or two or more nonadjacent $-CH_2-$ in the group may each be substituted with -O- or -S-, a 1,4-phenylene group; one -CH= or two or more nonadjacent -CH= in the group may each be substituted with -N=, a 1,4-cyclohexenylene group, a 1,4-bicyclo[2.2.2] octylene group, a piperidine-1,4-diyl group, a naphthalene-2,6-diyl group, a decahydronaphthalene-2,6-diyl group, or a 1,2,3,4-tetrahydronaphthalene-2,6-diyl group, and hydrogen atoms in the group may be each independently substituted with a fluorine atom, a $-CF_3$ group, an alkyl group having 1 to 10 carbon atoms, an alkoxyl group having 1 to 10 carbon atoms, or any one of groups represented by formula (R-1) to formula (R-15):

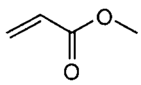

(R-1)

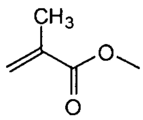

(R-2)

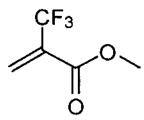

(R-3)

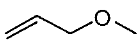

(R-4)

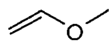

(R-5)

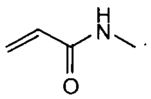

(R-6)

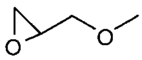

(R-7)

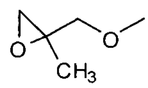

(R-8)

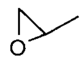

(R-9)

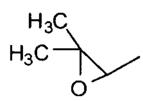

(R-10)

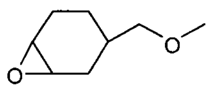

(R-11)

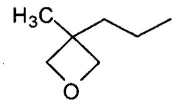

(R-12)

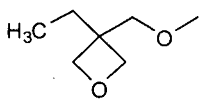

(R-13)

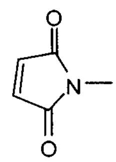

(R14)

HS—

(R-15) ;

$Z^{201}$ and $Z^{202}$ each independently represent $-OCH_2-$, $-CH_2O-$, -COO-, -OCO-, $-CF_2O-$, $-OCF_2-$, $-CH_2CH_2-$, $-CF_2CF_2-$, -CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, $-CY^1=CY^2-$, in the formula, $Y^1$ and $Y^2$ each independently represent a fluorine atom or a hydrogen atom, -C≡C-, or a single bond; $n^{201}$ represents 0, 1, or 2; and when there are two or more rings $M^{202}$ and two or more $Z^{202}$, they may each be the same or different.

9. A liquid crystal display device that uses the liquid crystal composition according to any one of Claims 1 to 8.

10. The liquid crystal display device according to claim 9, which is an active-matrix-driving liquid crystal display device.

**11.** The liquid crystal display device according to claim 9, which is a VA-mode, PSA-mode, PSVA-mode, IPS-mode, or ECB-mode liquid crystal display device.

## Patentansprüche

**1.** Flüssigkristallzusammensetzung, umfassend:

eine Verbindung, dargestellt durch die Formel (I-1) als erste Komponente

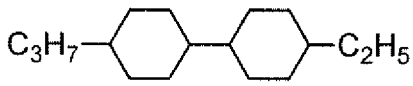

(I-1)

,

eine Verbindung, dargestellt durch die Formel (I-2) als zweite Komponente

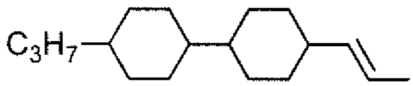

(I-2)

und

eine Verbindung mit einer negativen dielektrischen Anisotropie ($\Delta\varepsilon$), deren absoluter Wert größer als 3 ist, als dritte Verbindung,

wobei eine oder mehrere Verbindung(en) ausgewählt aus der Gruppe, bestehend aus Verbindungen, dargestellt durch die allgemeine Formel (II-1) und die allgemeine Formel (II-2), als die dritte Komponente enthalten ist/sind:

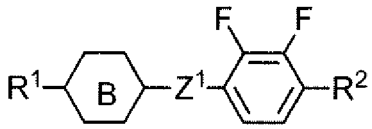

(II-1)

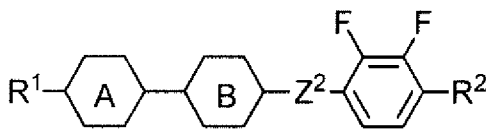

(II-2)

in den Formeln

stellt $R^1$ eine Alkylgruppe mit 1 bis 3 Kohlenstoffatom(en) oder eine Alkenylgruppe mit 3 Kohlenstoffatomen dar;

stellt $R^2$ eine Alkylgruppe mit 1 bis 10 Kohlenstoffatom(en), eine Alkoxygruppe mit 1 bis 10 Kohlenstoffatom(en), eine Alkenylgruppe mit 2 bis 10 Kohlenstoffatomen oder eine Alkenyloxygruppe mit 2 bis 10 Kohlenstoffatomen dar; kann/können ein $-CH_2-$ oder zwei oder mehr nichtbenachbarte-$CH_2-$ in $R^1$ und $R^2$ jeweils unabhängig voneinander durch -O- und/oder -S- ersetzt sein; kann/können ein oder mehrere Wasserstoffatom(e) in $R^1$ und $R^2$ jeweils unabhängig voneinander durch ein Fluoratom oder ein Chloratom ersetzt sein;

stellen Ring A und Ring B jeweils unabhängig voneinander eine trans-1,4-Cyclohexylengruppe, eine 1,4-Phenylengruppe, eine 2-Fluor-1,4-phenylengruppe, eine 3-Fluor-1,4-phenylengruppe, eine 3,5-Difluor-1,4-phenylengruppe, eine 2,3-Difluor-1,4-phenylengruppe, eine 1,4-Cyclohexenylengruppe, eine 1,4-Bicyclo[2.2.2]octylengruppe, eine Piperidin-1,4-diylgruppe, eine Naphthalin-2,6-diylgruppe, eine Decahydronaphthalin-2,6-diylgruppe oder eine 1,2,3,4-Tetrahydronaphthalin-2,6-diylgruppe dar;

und stellen $Z^1$ und $Z^2$ jeweils unabhängig voneinander $-OCH_2-$, $-CH_2O-$, $-CF_2O-$, $-OCF_2-$, $-CH_2CH_2-$, $-CF_2CF_2-$ oder eine Einfachbindung dar, und

wobei

die Flüssigkristallzusammensetzung 10 bis 25 Massen-% von einer Verbindung, dargestellt durch die allgemeine Formel (I-1), enthält, und
der Gehalt der Verbindungen, dargestellt durch die allgemeine Formel (II-1) und die allgemeine Formel (II-2), 30 bis 70 Massen-% ist;
mit der Maßgabe, dass die in der folgenden Tabelle aufgeführten Zusammensetzungen A und B ausgeschlossen sind:

| **Zusammensetzung A** | | **Zusammensetzung B** | |
|---|---|---|---|
| **Verbindung** | **Massen-%** | **Verbindung** | **Massen-%** |
| 3-Cy-Cy-2 | 23% | 3-Cy-Cy-2 | 22% |
| 3-Cy-Cy-4 | 6% | 5-Ph-Ph-1 | 3% |
| 3-Cy-Cy-V | 9% | 3-Cy-Cy-V | 12% |
| 3-Cy-Cy-V1 | 5% | 3-Cy-Cy-V1 | 6% |
| 3-Cy-Ph5-O2 | 7% | 3-Cy-Ph5-O2 | 7% |
| 3-Cy-Ph5-O4 | 7% | 3-Cy-Ph5-O4 | 8% |
| 2-Cy-Ph-Ph5-O2 | 6% | 2-Cy-Ph-Ph5-O2 | 6% |
| 3-Cy-Ph-Ph5-O2 | 7% | 3-Cy-Ph-Ph5-O2 | 7% |
| 3-Cy-Cy-Ph5-O3 | 7% | 3-Cy-Cy-Ph5-O3 | 7% |
| 4-Cy-Cy-Ph5-O2 | 8% | 4-Cy-Cy-Ph5-O2 | 7% |
| 5-Cy-Cy-Ph5-O2 | 7% | 5-Cy-Cy-Ph5-O2 | 7% |
| 3-Ph-Ph5-Ph-2 | 4% | 3-Ph-Ph5-Ph-2 | 4% |
| 4-Ph-Ph5-Ph-2 | 4% | 4-Ph-Ph5-Ph-2 | 4% |

wobei die folgenden Abkürzungen verwendet werden, um die Verbindungen zu beschreiben:

| | | |
|---|---|---|
| -n | $-C_nH_{2n+1}$ | (lineare Alkylgruppe mit n-Kohlenstoffatomen) |
| n- | $C_nH_{2n+1}-$ | (lineare Alkylgruppe mit n-Kohlenstoffatomen) |
| -On | $-OC_nH_{2n+1}$ | (lineare Alkoxygruppe mit n-Kohlenstoffatomen) |
| -V | $-CH=CH_2$ | |
| -V1 | $-CH=CH-CH_3$ | |

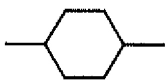
Cy

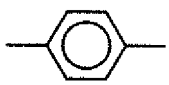
Ph

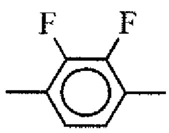
Ph5
.

2. Flüssigkristallzusammensetzung gemäß Anspruch 1, wobei die Flüssigkristallzusammensetzung eine dielektrische Anisotropie ($\Delta\varepsilon$) in einem Bereich von -2,0 bis 8,0 bei 25°C, eine Brechungsindexanisotropie ($\Delta n$) in einem Bereich von 0,08 bis 0,14 bei 20°C, eine Viskosität ($\eta$) in einem Bereich von 10 bis 30 mPa·s bei 20°C, eine Rotationsviskosität ($\gamma 1$) in einem Bereich von 60 bis 130 mPa·s bei 20°C und eine Übergangstemperatur zwischen nematischer Phase und isotrop-flüssiger Phase ($T_{ni}$) in einem Bereich von 60°C bis 120°C aufweist.

3. Flüssigkristallzusammensetzung nach einem der Ansprüche 1 oder 2, umfassend, als eine vierte Komponente, eine oder mehrere Verbindung(en), ausgewählt aus der Gruppe, bestehend aus Verbindungen, dargestellt durch die allgemeine Formel (III-A) bis allgemeine Formel (III-J):

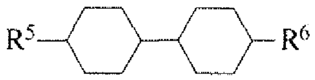
( III-A )

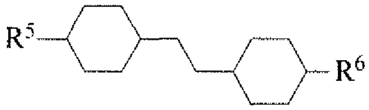
( III-B )

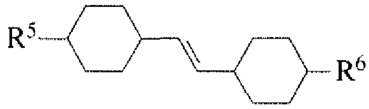
( III-C )

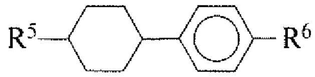
( III-D )

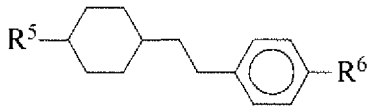
( III-E )

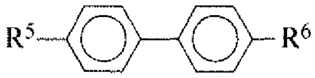
( III-F )

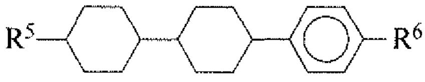
( III-G )

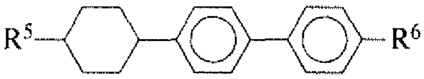
(III-H)

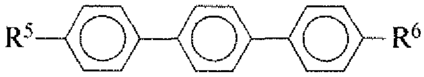
(III-I)

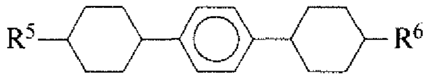
(III-J)

in den Formeln stellt $R^5$ eine Alkylgruppe mit 1 bis 5 Kohlenstoffatom(en), oder eine Alkenylgruppe mit 2 bis 5 Kohlenstoffatomen dar; stellt $R^6$ eine Alkylgruppe mit 1 bis 5 Kohlenstoffatom(en), eine Alkoxygruppe mit 1 bis 5 Kohlenstoffatom(en), eine Alkenylgruppe mit 2 bis 5 Kohlenstoffatomen oder eine Alkenyloxygruppe mit 2 bis 5 Kohlenstoffatomen dar; und umfassen Verbindungen, die durch die allgemeine Formel (III-A) dargestellt sind, nicht die gleichen Verbindungen wie diejenigen, die durch die Formel (I-1) und die Formel (I-2) dargestellt sind).

**4.** Flüssigkristallzusammensetzung gemäß Anspruch 1 oder 3, wobei eine Verbindung, dargestellt durch die allgemeine Formel (II-1), und eine Verbindung, dargestellt durch die allgemeine Formel (II-2), gleichzeitig enthalten sind.

**5.** Flüssigkristallzusammensetzung gemäß einem der Ansprüche 1 bis 4, wobei die allgemeine Formel (II-1) die allgemeine Formel (II-A1) bis allgemeine Formel (II-A4) ist:

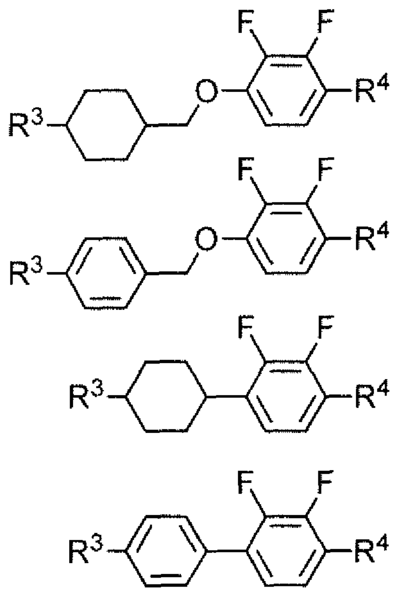
(II-A1)

(II-A2)

(II-A3)

(II-A4)

in den Formeln sind $R^3$ und $R^4$ jeweils unabhängig voneinander das gleiche wie $R^1$ und $R^2$,
und ist die allgemeine Formel (II-2) die allgemeine Formel (II-B1) bis allgemeine Formel (II-B6):

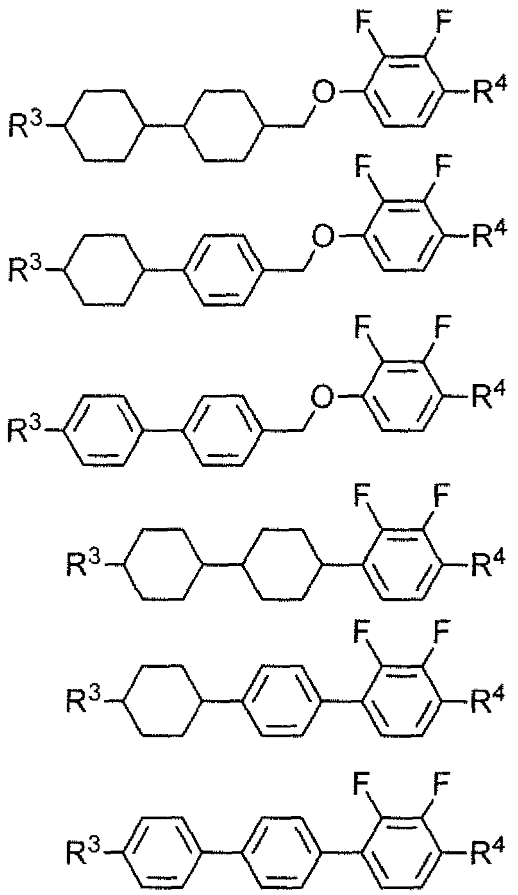

(II-B1)

(II-B2)

(II-B3)

(II-B4)

(II-B5)

(II-B6)

in den Formeln sind $R^3$ und $R^4$ jeweils unabhängig voneinander das gleiche wie $R^1$ und $R^2$.

6. Flüssigkristallzusammensetzung gemäß einem der Ansprüche 1 bis 5, umfassend eine oder mehrere Verbindung(en), ausgewählt aus der Gruppe, bestehend aus den Verbindungen, dargestellt durch die allgemeine Formel (II-1) und allgemeine Formel (II-2), wobei $R^1$ eine Propenylgruppe darstellt.

7. Flüssigkristallzusammensetzung gemäß einem der Ansprüche 1 bis 6, umfassend eine oder mehrere polymerisierbare Verbindung(en).

8. Flüssigkristallzusammensetzung gemäß Anspruch 7, wobei die polymerisierbaren Verbindungen durch die allgemeine Formel (M) dargestellt sind:

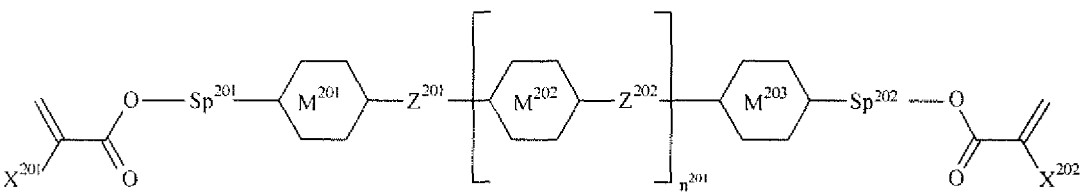

(M)

in der Formel stellen $X^{201}$ und $X^{202}$ jeweils unabhängig voneinander ein Wasserstoffatom, eine Methylgruppe oder eine $-CF_3$-Gruppe dar; stellen $Sp^{201}$ und $Sp^{202}$ jeweils unabhängig voneinander eine Einfachbindung, eine Alkylengruppe mit 1 bis 8 Kohlenstoffatom(en) oder $-O-(CH_2)_s-$ dar, wobei s eine ganze Zahl von 2 bis 7 darstellt und das Sauerstoffatom an einen Ring gebunden ist; stellen der Ring $M^{201}$, der Ring $M^{202}$ und der Ring $M^{203}$ jeweils unabhängig voneinander eine trans-1,4-Cyclohexylengruppe dar; kann/können eine $-CH_2-$ oder zwei oder mehrere nichtbenachbarte $-CH_2-$ in der Gruppe jeweils ersetzt sein durch -O- oder -S-, eine 1,4-Phenylengruppe ; kann/können eine -CH= oder zwei oder mehr nichtbenachbarte -CH= in der Gruppe jeweils ersetzt sein durch -N=, eine 1,4-Cyclohexenylengruppe, eine 1,4-Bicyclo[2.2.2]octylengruppe, eine Piperidin-1,4-diylgruppe, eine Naphthalin-2,6-diylgruppe, eine Decahydro-naphthalin-2,6-diylgruppe oder eine 1,2,3,4-Tetrahydronaphthalin-2,6-diylgruppe, und können Wasserstoffatome in der Gruppe jeweils unabhängig voneinander ersetzt sein durch ein Fluoratom, eine $-CF_3$-Gruppe, eine Alkylgruppe mit 1 bis 10 Kohlenstoffatom(en), eine Alkoxygruppe mit 1-10 Kohlenstoffatom(en), oder eine der durch die Formel (R-1) bis Formel (R-15) dargestellten Gruppen:

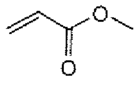
(R-1)
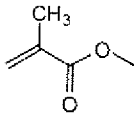
(R-2)
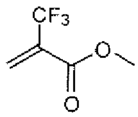
(R-3)
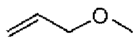
(R-4)
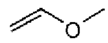
(R-5)

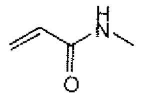
(R-6)
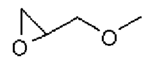
(R-7)
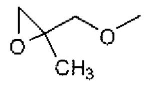
(R-8)
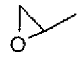
(R-9)
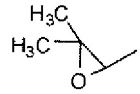
(R-10)

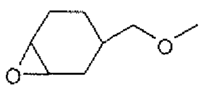
(R-11)
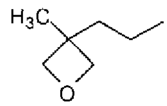
(R-12)
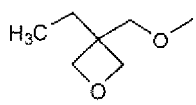
(R-13)
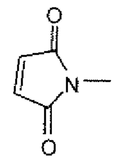
(R14)
HS—
(R-15)

stellen $Z^{201}$ und $Z^{202}$ jeweils unabhängig voneinander $-OCH_2-$, $-CH_2O-$, -COO-, -OCO-, $-CF_2O-$, $-OCF_2-$, $-CH_2CH_2-$, $-CF_2CF_2-$, -CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, $-CY^1=CY^2-$ dar, in der Formel stellen $Y^1$ und $Y^2$ jeweils unabhängig voneinander ein Fluoratom oder ein Wasserstoffatom, -C≡C- oder eine Einfachbindung dar; stellt $n^{201}$ 0, 1 oder 2 dar; und wenn es zwei oder mehrere Ringe $M^{202}$ und zwei oder mehr $Z^{202}$ gibt, können diese jeweils gleich oder verschieden sein.

**9.** Flüssigkristallanzeigevorrichtung, die die Flüssigkristallzusammensetzung nach einem der Ansprüche 1 bis 8 verwendet.

**10.** Flüssigkristallanzeigevorrichtung nach Anspruch 9, bei der es sich um eine Flüssigkristallanzeigevorrichtung mit aktiver Matrixsteuerung handelt.

**11.** Flüssigkristallanzeigevorrichtung nach Anspruch 9, bei der es sich um eine VA-Modus-, PSA-Modus-, PSVA-Modus-, IPS-Modus- oder ECB-Modus-Flüssigkristallanzeigevorrichtung handelt.

## Revendications

**1.** Composition de cristaux liquides comprenant :

un composé représenté par la formule (I-1) en tant que premier constituant

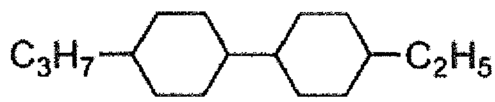
(I-1) ,

un composé représenté par la formule (I-2) en tant que deuxième constituant

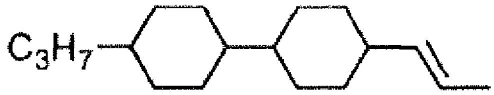

(I-2)

,

et

un composé ayant une anisotropie diélectrique négative (Δε) dont une valeur absolue est supérieure à 3 en tant que troisième constituant,

dans laquelle un ou plusieurs composés sélectionnés parmi le groupe constitué de composés représentés par la formule générale (II-1) et la formule générale (II-2) sont présents en tant que troisième constituant :

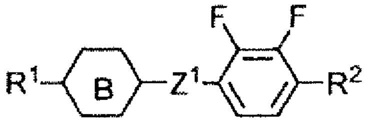

(II-1)

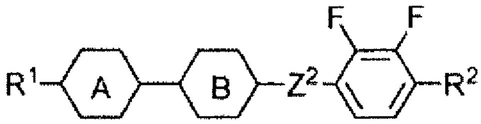

(II-2)

dans les formules,

$R^1$ représente un groupe alkyle ayant de 1 à 3 atomes de carbone, ou un groupe alcényle ayant 3 atomes de carbone ;

$R^2$ représente un groupe alkyle ayant de 1 à 10 atomes de carbone, un groupe alcoxyle ayant de 1 à 10 atomes de carbone, un groupe alcényle ayant de 2 à 10 atomes de carbone, ou un groupe alcényloxy ayant de 2 à 10 atomes de carbone ;

un $-CH_2-$ ou au moins deux $-CH_2-$ non adjacents dans $R^1$ et $R^2$ peuvent chacun indépendamment être substitué par -O- et/ou -S- ; un ou plusieurs atomes d'hydrogène dans $R^1$ et $R^2$ peuvent chacun indépendamment être substitué par un atome de fluor ou un atome de chlore ;

le cycle A et le cycle B peuvent chacun indépendamment représenter un groupe trans-1,4-cyclohexylène, un groupe 1,4-phénylène, un groupe 2-fluoro-1,4-phénylène, un groupe 3-fluoro-1,4-phénylène, un groupe 3,5-difluoro-1,4-phénylène, un groupe 2,3-difluoro-1,4-phénylène, un groupe 1,4-cyclohéxenylène, un groupe 1,4-bicyclo[2.2.2]octylène, un groupe pipéridine-1,4-diyle, un groupe naphthalène-2,6-diyle, un groupe décahydronaphthalène-2,6-diyle, ou un groupe 1,2,3,4-tétrahydronaphthalène-2,6-diyle ;

et $Z^1$ et $Z^2$ représentent chacun indépendamment $-OCH_2-$, $-CH_2O-$, $- CF_2O-$, $-OCF_2-$ $-CH_2CH_2-$, $-CF_2CF_2-$, ou une liaison simple, et

dans laquelle

la composition de cristaux liquides contient de 10 % à 25 % en masse d'un composé représenté par la formule générale (I-1), et

la teneur en composés représentés par la formule générale (II-1) et la formule générale (II-2) est de 30 % à 70 % en masse ;

à condition que les compositions A et B telles que présentées dans le tableau suivant soient exclues :

| **Composition A** | | **Composition B** | |
|---|---|---|---|
| **Composé** | **% en masse** | **Composé** | **% en masse** |
| 3-Cy-Cy-2 | 23 % | 3-Cy-Cy-2 | 22 % |
| 3-Cy-Cy-4 | 6 % | 3-Ph-Ph-1 | 3 % |
| 3-Cy-Cy-V | 9 % | 3-Cy-Cy-V | 12 % |
| 3-Cy-Cy-V1 | 5 % | 3-Cy-Cy-V1 | 6 % |
| 3-Cy-Ph5-O2 | 7 % | 3-Cy-Ph5-O2 | 7 % |
| 3-Cy-Ph5-O4 | 7 % | 3-Cy-Ph5-O4 | 8 % |
| 2-Cy-Ph-Ph5-O2 | 6 % | 2-Cy-Ph-Ph5-O2 | 6 % |

(suite)

| Composition A | | Composition B | |
|---|---|---|---|
| **Composé** | **% en masse** | **Composé** | **% en masse** |
| 3-Cy-Ph-Ph5-O2 | 7 % | 3-Cy-Ph-Ph5-O2 | 7 % |
| 3-Cy-Cy-Ph5-O3 | 7 % | 3-Cy-Cy-Ph5-O3 | 7 % |
| 4-Cy-Cy-Ph5-O2 | 8 % | 4-Cy-Cy-Ph5-O2 | 7 % |
| 5-Cy-Cy-Ph5-O2 | 7 % | 5-Cy-Cy-Ph5-O2 | 7 % |
| 3-Ph-Ph5-Ph-2 | 4 % | 3-Ph-Ph5-Ph-2 | 4 % |
| 4-Ph-Ph5-Ph-2 | 4 % | 4-Ph-Ph5-Ph-2 | 4 % |

dans laquelle les abréviations suivantes sont utilisées pour décrire les composés :

| | |
|---|---|
| -n | $-C_nH_{2n+1}$ (groupe alkyle linéaire ayant n atomes de carbone) |
| n- | $C_nH_{2n+1}-$ (groupe alkyle linéaire ayant n atomes de carbone) |
| -On | $-OC_nH_{2n+1}$ (groupe alcoxyle linéaire ayant n atomes de carbone) |
| -V | $-CH=CH_2$ |
| -V1 | $-CH=CH-CH_3$ |

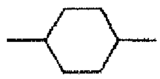
Cy

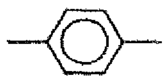
Ph

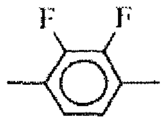
Ph5

**2.** Composition de cristaux liquides selon la revendication 1, dans laquelle la composition de cristaux liquides a une anisotropie diélectrique ($\Delta\varepsilon$) dans la plage de -2,0 à -8,0 à 25 °C, une anisotropie d'indice de réfraction ($\Delta n$) dans la plage de 0,08 à 0,14 à 20 °C, une viscosité ($\eta$) dans la plage de 10 à 30 mPa·s à 20 °C, une viscosité rotationnelle ($\gamma 1$) dans la plage de 60 à 130 mPa·s à 20 °C, et une température de transition de phase nématique à phase liquide isotropique ($T_{ni}$) dans la plage de 60 °C à 120 °C.

**3.** Composition de cristaux liquides selon l'une quelconque des revendications 1 ou 2, comprenant, en tant que quatrième constituant, un ou plusieurs composés sélectionnés parmi le groupe constitué de composés représentés par la formule générale (III-A) à la formule générale (III-J) :

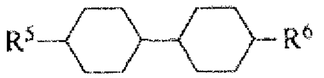 (III-A)

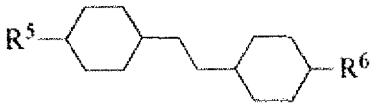 (III-B)

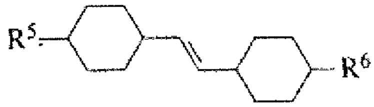 (III-C)

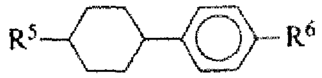 (III-D)

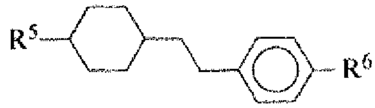 (III-E)

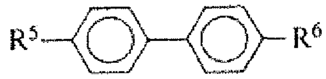 (III-F)

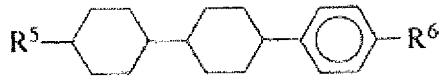 (III-G)

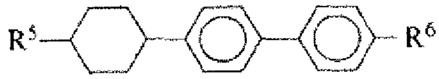 (III-H)

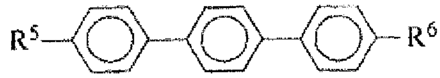 (III-I)

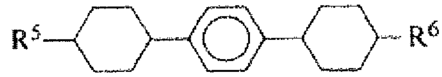 (III-J)

dans les formules, $R^5$ représente un groupe alkyle ayant de 1 à 5 atomes de carbone ou un groupe alcényle ayant de 2 à 5 atomes de carbone ; $R^6$ représente un groupe alkyle ayant de 1 à 5 atomes de carbone, un groupe alcoxyle ayant de 1 à 5 atomes de carbone, un groupe alcényle ayant de 2 à 5 atomes de carbone, ou un groupe alcényloxy ayant de 2 à 5 atomes de carbone ; et des composés représentés par la formule générale (III-A) n'incluent pas les mêmes composés que ceux représentés par la formule (I-1) et la formule (I-2).

**4.** Composition de cristaux liquides selon la revendication 1 ou 3, dans laquelle un composé représenté par la formule générale (II-1) et un composé représenté par la formule générale (II-2) sont contenus simultanément.

**5.** Composition de cristaux liquides selon l'une quelconque des revendications 1 à 4, dans laquelle la formule générale (II-1) est la formule générale (II-A1) à la formule générale (II-A4) :

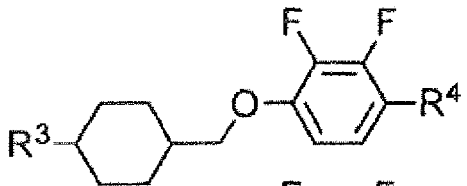 (II-A1)

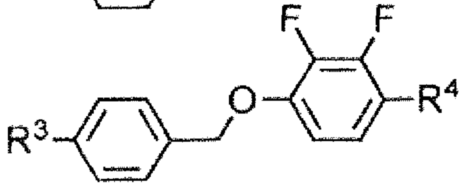 (II-A2)

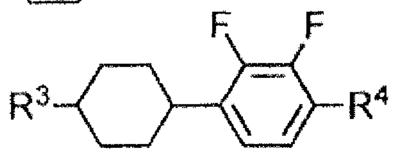 (II-A3)

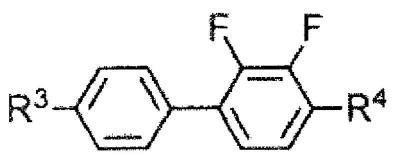 (II-A4)

dans les formules, $R^3$ et $R^4$ sont chacun indépendamment les mêmes que $R^1$ et $R^2$,
et la formule générale (II-2) est la formule générale (II-B1) à la formule générale (II-B6) :

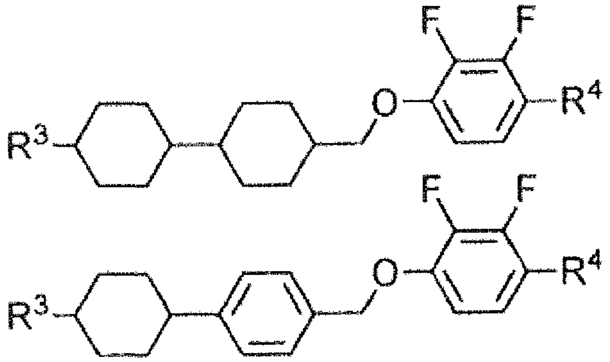

(II-B1)

(II-B2)

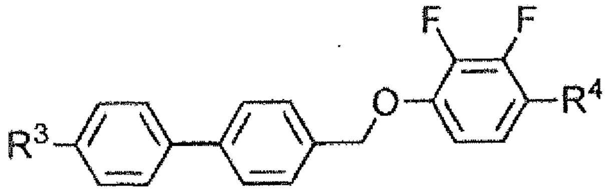

(II-B3)

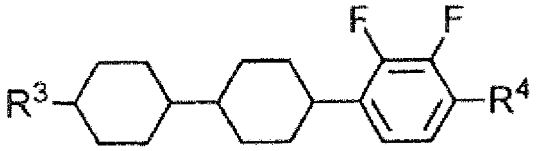

(II-B4)

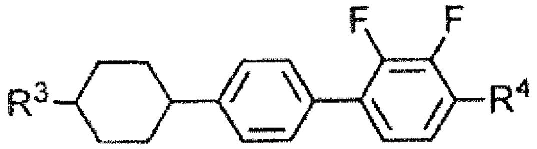

(II-B5)

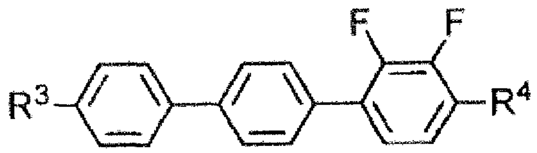

(II-B6)

dans les formules, $R^3$ et $R^4$ sont chacun indépendamment les mêmes que $R^1$ et $R^2$.

**6.** Composition de cristaux liquides selon l'une quelconque des revendications 1 à 5, comprenant un ou plusieurs composés sélectionnés parmi le groupe constitué de composés représentés par la formule générale (II-1) et la formule générale (II-2) avec $R^1$ représentant un groupe propényle.

**7.** Composition de cristaux liquides selon l'une quelconque des revendications 1 à 6, comprenant un ou plusieurs composés polymérisables.

**8.** Composition de cristaux liquides selon la revendication 7, dans laquelle les composés polymérisables sont représentés par la formule générale (M) :

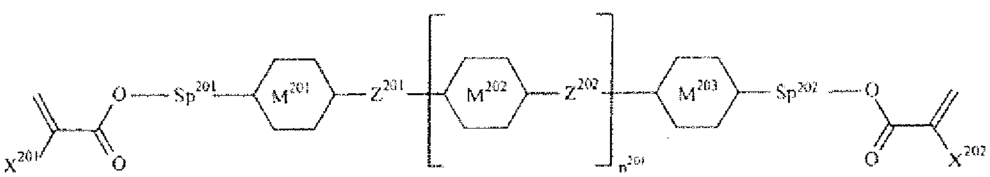

(M)

dans la formule, $X^{201}$ et $X^{202}$ représentent chacun indépendamment un atome d'hydrogène, un groupe méthyle, ou un groupe $-CF_3$ ; $Sp^{201}$ et $Sp^{202}$ représentent chacun indépendamment une liaison simple, un groupe alkylène ayant de 1 à 8 atomes de carbone, ou $-O-(CH_2)_s-$, où s représente un entier de 2 à 7 et l'atome d'oxygène est destiné à se lier à un cycle ; le cycle $M^{201}$, le cycle $M^{202}$, et le cycle $M^{203}$ représentent chacun indépendamment un groupe

trans-1,4-cyclohéxylène ; un $-CH_2-$ ou au moins deux $-CH_2-$ non adjacents dans le groupe peuvent chacun être substitué par -O- ou -S-, un groupe 1,4-phénylène ; un -CH= ou au moins deux -CH= non adjacents dans le groupe peuvent chacun être substitué par -N=, un groupe 1,4-cyclohéxenylène, un groupe 1,4-bicyclo[2.2.2]octylène, un groupe pipéridine-1,4-diyle, un groupe naphthalène-2,6-diyle, un groupe décahydronaphthalène-2,6-diyle, ou un groupe 1,2,3,4-tétrahydronaphthalène-2,6-diyle, et des atomes d'hydrogène dans le groupe peuvent chacun être indépendamment substitué par un atome de fluor, un groupe $-CF_3$, un groupe alkyle ayant de 1 à 10 atomes de carbone, un groupe alcoxyle ayant de 1 à 10 atomes de carbone, ou un quelconque des groupes représentés par la formule (R-1) à la formule (R-15) :

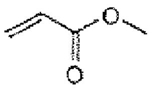
(R-1)

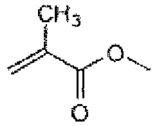
(R-2)

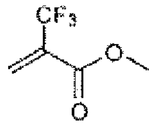
(R-3)

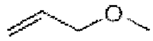
(R-4)

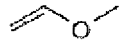
(R-5)

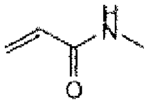
(R-6)

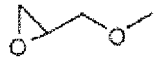
(R-7)

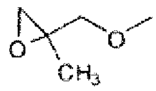
(R-8)

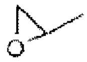
(R-9)

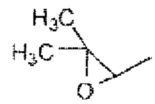
(R-10)

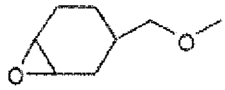
(R-11)

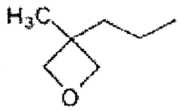
(R-12)

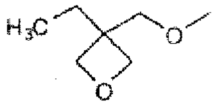
(R-13)

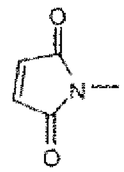
(R14)

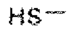
(R-15) ;

$Z^{201}$ et $Z^{202}$ représentent chacun indépendamment $-OCH_2-$, - $CH_2O-$, -COO-, -OCO-, $-CF_2O-$, $-OCF_2-$, $-CH_2CH_2-$, $-CF_2CF_2-$, -CH=CH-, -COO-, -CH=CH-OCO-, -COO-CH=CH-, -OCO-CH=CH-, $-COO-CH_2CH_2-$, $-OCO-CH_2CH_2-$, - $CH_2CH_2-COO-$, $-CH_2CH_2-OCO-$, $-COO-CH_2-$, $-OCO-CH_2-$, $-CH_2-COO-$, $-CH_2-OCO-$, $-CY^1=CY^2-$, dans la formule, $Y^1$ et $Y^2$ représentent chacun indépendamment un atome de fluor ou un atome d'hydrogène, -C=C-, ou une liaison simple ; $n^{201}$ représente 0, 1, ou 2 ; et lorsqu'il y a au moins deux cycles $M^{202}$ et au moins deux $Z^{202}$, ils peuvent chacun être identique ou différent.

**9.** Dispositif d'affichage à cristaux liquides qui utilise la composition de cristaux liquides selon l'une quelconque des revendications 1 à 8.

**10.** Dispositif d'affichage à cristaux liquides selon la revendication 9, qui est un dispositif d'affichage à cristaux liquides à excitation de matrice active.

**11.** Dispositif d'affichage à cristaux liquides selon la revendication 9, qui est un dispositif d'affichage à cristaux liquide à mode VA, mode PSA, mode PSVA, mode IPS, ou mode ECB.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2011140040 A1
- US 2012261614 A1
- EP 2325280 A1
- US 2011175027 A1
- EP 2050807 A1
- EP 2883935 A1
- EP 2727978 A1
- WO 2012066933 A1
- JP 2008031432 A
- WO 2010084810 A1
- WO 2014024648 A1
- JP 8104869 A
- EP 0474062 A
- JP 2006037054 A
- JP 2001354967 A
- JP 2008144135 A
- JP 2006301643 A